# EUROPEAN PATENT APPLICATION

(11) **EP 1 530 216 A1**
(43) Date of publication of application: **11.05.2005**
(21) Application number: 04022841.3
(22) Date of filing: 24.09.2004
(51) Int. Cl.: G11B 27/30

(54) **Image editing apparatus and image editing method**

(30) Priority: 06.11.2003 JP 2003377314
(71) Applicant: Kabushiki Kaisha Toshiba, Tokyo 105-8001 (JP)
(72) Inventor: Moteki, Masataka, c/o Int. Prop. Div., Toshiba Cor, Tokyo (JP)
(74) Representative: Henkel, Feiler & Hänzel

(57) **Abstract**

An image editing apparatus comprising a recording unit (12 to 15) configured to record a title including image information onto a recording medium (11, 13a); a dividing unit (17) configured to divide the title into a plurality of chapters by setting information (EP) showing boundaries at arbitrary positions of a title recorded on the recording medium (11, 13a) at the recording unit (12 to 15); a setting unit (17) configured to set information showing attributes (Property_Flag, EP_Type, PRM_TXTI) of chapters including the information (EP), in the information (EP) showing boundaries included in the respective chapters divided at the dividing unit (17); and a control unit (17) configured to sort the chapters on the basis of the information showing attributes (Property_Flag, EP_Type, PRM_TXTI) set at the setting unit (17), and to apply predetermined editing processing with respect to the plural sorted chapters (FIGS. 1, and 11 to 24).

## Description

The present invention relates to an image editing apparatus and an image editing method suitable for editing image information recorded on a recording medium such as, for example, an optical disk or the like.

As well known, in recent years, a technique of recording information at a high density has been developed, and an optical disk having a recording capacity of 4.7 GB (Giga Byte) on one side layer has been put to practical use.

As this type of optical disk, for example, there are DVD-ROMs (Digital Versatile Disk-Read Only Memory). dedicated for playback, DVD-RAMs (Random Access Memory) and DVD-RWs (Rewritable) which are rewritable, DVD-Rs (Recordable) which can be additionally written, and the like.

By the way, in a recording and playback apparatus in which recording and playback of image information are carried out with respect to a recordable optical disk, editing processing such as changing the order of. playback or the like can be applied to the image information recorded on the optical disk by arbitrarily carrying out moving or combining in units of titles or units of chapters which are partial regions of a title.

In Jpn. Pat. Appln. KOKAI Publication No. 2003-30675, there is disclosed a configuration in which a plurality of thumbnails corresponding to titles or chapters which are the partial regions of the titles are displayed on an operation screen, and on the screen, editing processing for a play list is carried out by selecting specific thumbnails or a space between adjacent thumbnails.

In this case, when an editing operation such as moving or combining of the titles or the chapters is carried out while a plurality of thumbnails corresponding to titles or chapters are being displayed on an operation screen, setting of a title or a chapter which will be a moving origin or a combining origin, setting of a title or a chapter which will be a moving destination or a combining destination, and the like are realized in a mode in which a thumbnail corresponding to a title or a chapter is selected by operating switches of a recording and playback apparatus body or a remote controller.

In this Jpn. Pat. Appln. KOKAI Publication No. 2003-30675, it is configured such that a user grasps titles or chapters by thumbnails displayed on an operation screen. By the way, in a case of titles, it is sufficient to grasp the broad contents in many cases, and it is possible to sufficiently grasp the contents or the characteristics of the titles by only thumbnails.

However, in a case of chapters which are partial regions of titles, depending on the contents, in many cases, a user cannot sufficiently grasp the contents or the characteristics of the chapters by only thumbnails.

Generally, editing processing is frequently carried out in which the inside of a title is divided into a necessary portion and an unnecessary portion for a user so as to be respectively separate chapters, and a play list is prepared by gathering the chapters in the necessary portion, or the chapters in the unnecessary portion are deleted.

However, unless the contents include greatly characteristic scene, both of the necessary chapters and the unnecessary chapters are displayed in similar thumbnails, and the problem that it is difficult for a user to understand what contents of chapters there were, or a distinction of necessity/disuse has been brought about.

In order to cope with this problem, for example, there are cases in which a name provided to the chapter is indicated beside the thumbnail, or a preview function of playback-displaying only the image of the chapter portion corresponding to the thumbnail is provided.

However, in view of circumstances in which the ease of viewing an operation screen is focused on, in many cases, relatively large-sized characters are displayed on the operation screen, and because the number of characters which can be indicated is limited in accordance therewith, it is not necessarily sufficient to grasp the contents or the characteristics of the chapter. Further, in order to use a preview function, it is necessary to carry out a preview operation each time again, and the inconvenience that the operation is made complicated is brought about.

The present invention has been achieved in consideration of the above-described circumstances. An object of the present invention is to provide an image editing apparatus and an image editing method in which contents and characteristics of chapters which are partial regions of a title can be easily grasped, and an attempt can be made to improve the convenience for a user in editing operations.

According to one aspect of the present invention, there.is provided an image editing apparatus comprising: a recording unit configured to record a title including image information onto a recording medium; a dividing unit configured to divide the title into a plurality of chapters by setting information showing boundaries at arbitrary positions of a title recorded on the recording medium at the recording unit; a setting unit configured to set information showing attributes of chapters including the information, in the information showing boundaries included in the respective chapters divided at the dividing unit; and a control unit configured to sort the chapters on the basis of the information showing attributes set at the setting unit, and to apply predetermined editing processing with respect to the plural sorted chapters.

According to another aspect of the present invention, there is provided an image editing method comprising: recording a title including image information onto a recording medium; dividing the title into a plurality of chapters by setting information showing boundaries at arbitrary positions of a recorded title; setting information showing attributes of chapters including the information, in the information showing boundaries included in the respective divided chapters; and
sorting the chapters on the basis of the set information showing attributes, and applying predetermined editing processing with respect to the plural sorted chapters.

This summary of the invention does not necessarily describe all necessary features so that the invention may also be a sub-combination of these described features.

The invention can be more fully understood from the following detailed description when taken in conjunction with the accompanying drawings, in which:

### BRIEF DESCRIPTION OF THE SEVERAL VIEWS OF THE DRAWING

FIG. 1 shows an embodiment of the present invention, and is a block diagram for explaining a recording and playback apparatus;
FIG. 2 is a diagram for explaining relationships between management information and real picture data which are contents in the embodiment;
FIGS. 3A and 3B are respectively diagrams for explaining one example in which thumbnails are displayed so as to be distinguishable due to the attribute information set to chapters in the. embodiment;
FIG. 4 is a diagram for explaining details of attribute information which is set to an EP of a chapter in the embodiment;
FIG. 5 is a flowchart for explaining processing operations of setting attribute information to the chapters by using Property_Flag in the embodiment;
FIG. 6 is a flowchart for explaining processing operations of registering a specific character string which will be a key for sorting the chapters with the recording and playback apparatus in the processing of setting attribute information to the chapters by using PRM_TXTI in the embodiment;
FIG. 7 is a flowchart for explaining processing operations of interpreting the attribute information set to the chapters by using Property_Flag in the embodiment;
FIG. 8 is a flowchart for explaining processing operations of interpreting the attribute information set to the chapters by using EP_Type in the embodiment;
FIG. 9 is a.flowchart for explaining processing operations of interpreting the attribute information set to the chapters by using the specific character string registered with PRM_TXTI in the embodiment;
FIGS. 10A and 10B are respectively diagrams for explaining another example in which the thumbnails are displayed so as to be distinguishable due to the attribute information set to the chapters in the embodiment;
FIG. 11 is a flowchart for explaining an example of processing operations of displaying differences in the attributes, so as to be recognizable for each chapter on the basis of the attribute information set to the chapters in the embodiment;
FIG. 12 is a flowchart for explaining another example of the processing operations of displaying differences in the attributes so as to be recognizable for each chapter on the basis of the attribute information set to the chapters in the embodiment;
FIG. 13 is a flowchart for explaining processing operations of sorting the chapters in the title in accordance with differences in the attribute information, and of automatically carrying out parts registration with a play list in the embodiment;
FIG. 14 is a flowchart for explaining processing operations of sorting the chapters in the title in accordance with differences in the attribute information, and of automatically dubbing those as one title in the embodiment;
FIG. 15 is a flowchart for explaining processing operations of sorting the chapters in the title in accordance with differences in the attribute information, and of automatically dubbing those as respectively separate titles in the embodiment;
FIG. 16 is a flowchart for explaining processing operations of sorting the chapters in the title in accordance with differences in the attribute information, and of automatically deleting only chapters having a specific attribute in the embodiment;
FIG. 17 is a flowchart for explaining processing operations of sorting the chapters in the title in accordance with differences in the attribute information, and of automatically playback-displaying or preview-displaying only chapters having a specific attribute in the embodiment;
FIG. 18 is a flowchart for explaining processing operations of sorting the chapters in the title in accordance with differences in the attribute information, and of combining adjacent chapters having a specific attribute into one chapter in the embodiment;
FIG. 19 is a flowchart for explaining a part of processing operations of sorting the chapters in the title in accordance with differences in the attribute information, and of carrying out regular interval chapter division with respect to the chapters having a specific attribute in the embodiment;
FIG. 20 is a flowchart for explaining remaining portion of processing operations of sorting the chapters in the title in accordance with differences in the attribute information, and of carrying out regular interval chapter division with respect to the chapters having a specific attribute in the embodiment;
FIG. 21 is a flowchart for explaining processing operations of sorting the'chapters in the title in accordance with differences in the attribute information, and of automatically changing the chapters having a specific attribute collectively into another attribute in the embodiment;
FIG. 22 is a flowchart for explaining processing operations of sorting the chapters in the title in accordance with differences in the attribute information, and of applying chapter thumbnail settings to the chapters having a specific attribute while being sequentially switched in the embodiment;
FIG. 23 is a flowchart for explaining processing operations of sorting the chapters in the title in accordance with differences in the attribute information, and of applying chapter name settings to the chapters having a specific attribute while being sequentially switched in the embodiment; and
FIG. 24 is a flowchart for explaining processing operations of sorting the chapters in the title in accordance with differences in the attribute information, and of applying chapter deletions to the chapters having a specific attribute while being sequentially switched in the embodiment.

### DETAILED DESCRIPTION OF THE INVENTION

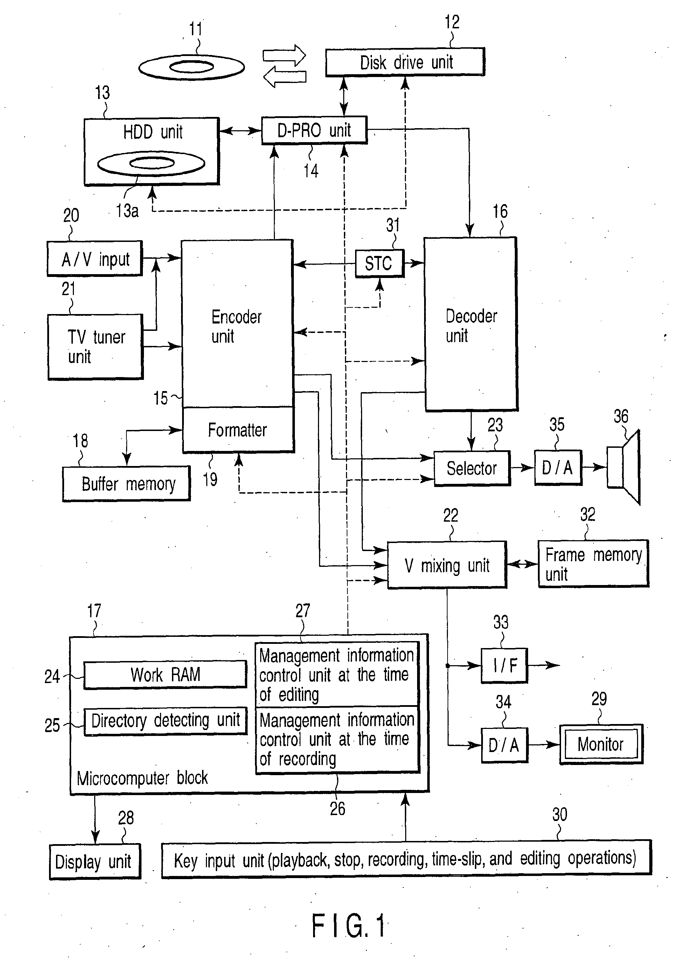

Hereinafter, an embodiment of the present invention will be described in detail with reference to the drawings. FIG. 1 shows a recording and playback apparatus which will be described in this embodiment. In the recording and playback apparatus, suppose that both of a DVD-RAM and a hard disk can be used as a recording medium. However, the hard disk or the DVD-RAM may be replaced with a recording medium such as, for example, a semiconductor memory or the like.

In the recording and playback apparatus shown in FIG. 1, if respective blocks are broadly divided, main blocks as a recording unit exist at the left side, and main blocks as a playback unit exist at the right side.

Namely, the recording and playback apparatus has two types of disk drive units. First, there is provided a disk drive unit 12 that rotationally drives an optical disk 11 serving as a first medium which is an information recording medium on which a video file can be constructed, and that executes reading and writing of information. Further, there is provided an HDD (Hard Disk Drive) unit 13 for driving a hard disk 13a serving as a second medium.

A D-PRO (Data-Processor) unit 14 can provide recording data to the disk drive unit 12 and the HDD unit 13, and further can receive played-back signals. The disk drive unit 12 has a rotation control system, a laser driving system, an optical system, and the like with respect to the optical disk 11.

The D-PRO unit 14 handles data in units of recording or playback, and includes a buffer circuit, a modulation/demodulator circuit, an error correction unit, and the like.

Further, the recording and playback apparatus has an encoder unit 15 configuring the recording side, a decoder unit 16 configuring the playback side, and a microcomputer block 17 for controlling the operations of the apparatus body as main constituent components.

The encoder unit 15 has analog to digital converters for video and for audio which digitize inputted analog video signals and analog audio signals, a video encoder, and an audio encoder. Moreover, the encoder unit 15 includes a sub picture encoder.

The output of the encoder unit 15 is converted into a predetermined DVD-RAM format at a formatter 19 including a buffer memory 18, and is supplied to the above D-PRO unit 14.

An external analog video signal and an external analog audio signal from an A/V (Audio/Video) input unit 20, or an analog video'signal and an analog audio signal from a TV (Television) tuner unit 21 are inputted to the encoder unit 15.

Note that, when a compressed digital video signal or digital audio signal is directly inputted to the encoder unit 15, the encoder unit 15 can supply the compressed digital video signal or digital audio signal directly to the formatter 19.

Further, the encoder unit 15 can supply analog-to-digital converted digital video signals or digital audio signals directly to the a V (Video) mixing unit 22 or an audio selector 23.

In the video encoder included in the encoder unit 15, the digital video signal is converted into a digital video signal compressed at a variable bit rate in accordance with the MPEG (Moving Picture Experts Group) 2 or MPEG 1 standard.

The digital audio signal is converted into a digital audio signal compressed at a fixed bit rate in accordance with the MPEG or the AC (Audio Compression)-3 standard, or into a digital audio signal of a linear PCM (Pulse Code Modulation).

When a sub picture signal is inputted from the A/V input unit 20 (for example, a signal from a DVD video player with an independent output terminal for sub picture signals, or the like), or when a DVD video signal having such a data structure is broadcast, and is received on the TV tuner unit 21, a sub picture signal in the DVD video signal is encoded (run length encoding) at the sub picture encoder, and made to a bit map of the sub picture.

The encoded digital video signal, digital audio signal, and sub picture signal are packed into a video pack, an audio pack, and a sub picture pack at the formatter 19. Moreover, those packs are collected and are converted into a format established by the DVD-VR (Video Recording) standard (for example, a standard for recording onto a DVD-RAM, a DVD-R, a DVD-RW, or the like).

Here, the recording and playback apparatus of FIG. 1 can provide the information formatted (the video, audio, sub picture data, or the like packs) and management information prepared at the formatter 19 to the HDD unit 13 or the disk drive unit 12 via the D-PRO unit 14, and can record those on the hard disk 13a or the optical disk 11.

Further, the information recorded on the hard disk 13a or the optical disk 11 can be recorded on the optical disk 11 or the hard disk 13a via the D-PRO unit 14 and the disk drive unit 12.

Furthermore, the video objects of a plurality of programs recorded on the hard disk 13a or the optical disk 11 can be processed to edit so as to delete some of those or to join an object of a different program thereto. The reason for this is that editing is made easy due to the data unit which the format according to the embodiment handles being defined.

The microcomputer block 17 includes an MPU (Micro Processing Unit) or a CPU (Central Processing Unit), a ROM on which a control program and the like are written, and a RAM for providing a work area needed for executing the program.

The MPU of the microcomputer block 17 executes defective place detection, unrecorded region detection, recorded information recording position setting, UDF (Universal Disk Format) recording, AV address setting, or the like by using the RAM as a work area in accordance with the control program stored in the ROM.

Further, the microcomputer block 17 has an information processing unit needed for controlling the entire system, and has a work RAM 24, a directory detecting unit 25, a VMG (entire video management information) information preparing unit, a copy related information detecting unit, a copy and scrambling information processing unit (RDI processing unit), a packet header processing unit, a sequence header processing unit, an aspect ratio information processing unit, and the like.

The microcomputer block 17 also has a management information control unit 26 for the time of executing recording and a management information control unit 27 for the time of executing editing.

Among the executed'results of the microcomputer block 17, the contents which must be reported to a user are displayed on a display unit 28 of the recording and playback apparatus or are OSD (On Screen Display)-displayed on a monitor display 29.

Further, the microcomputer block 17 has a key input unit 30 for providing a control signal for operating the recording and playback apparatus. The key input unit 30 corresponds to, for example, control switches provided on the body of the recording and playback apparatus or a remote controller, or the like. Further, the key input unit 30 may be a PC (Personal Computer) or the like connected to the recording and playback apparatus by using means such as wire communication, wireless communication, optical communication, infrared communication, or the like.

In any format, due to the user operating the key input unit 30, recording processing for inputted image audio signals, playback processing for recorded contents, or editing processing with respect to the recorded contents, or the like can be applied.

Note that the timings when the microcomputer block 17 controls the disk drive unit 12, the HDD unit 13, the D-PRO unit 14, the encoder unit 15, the decoder unit 16, and the like can be executed on the basis of time data from an STC (System Time Clock) 31. The operations of recording and playback are usually executed in synchronous with time clocks from the STC 31. However, processings other than those may be executed in timings independent of the STC 31.

The decoder unit 16 has a separator for separating and fetching the respective packs from a DVD formatted signal having a pack_structure, a memory used at the time of executing pack separating or other signal processings, a V decoder for decoding main picture data (the contents of the video pack) separated by the separator, an SP (Sub Picture) decoder for decoding sub picture data (the contents of the sub picture pack) separated by the separator, and an A decoder for decoding audio data (the contents of the audio pack) separated by the separator. Further, there is provided thereto a video processor which appropriately synthesizes a decoded sub picture with a decoded main picture, and which superposes a menu, a highlight button, a caption, or other sub pictures onto the main picture, and outputs it.

Output video signals of the decoder unit 16 are inputted to the V mixing unit 22. At the V mixing unit 22, synthesis of text data is carried out. Further, lines for directly fetching signals from the TV tuner unit 21 or the A/V input unit 20 are connected to the V mixing unit 22.

Further, a frame memory 32 used as a buffer is connected to the V mixing unit 22. In a case where the output of the V mixing unit 22 is an analog output, the output is outputted to the exterior via an I/F (Interface) 33, and in a case of a digital output, the output is outputted to the monitor display 29 at the exterior via a D/A (Digital to Analog) converter 34.

Output audio signals of the decoder unit 16 are converted into analog signals at a D/A converter 35 via the selector 23 and are outputted to an external speaker 36.

The selector 23 is controlled by a select signal from the microcomputer block 17. In accordance therewith, the selector 23 can directly select signals passing through the encoder unit 15 at the time of directly monitoring the digital signals from the TV tuner unit 21 or the A/V input unit 20.

Note that, at the formatter 19 of the encoder unit 15, during the recording, the respective bracketed information are prepared, and those are periodically transmitted to the MPU of the microcomputer block 17 [information such as a time of interrupting the top of a GOP (Group Of Picture), or the like]. As the bracketed information, there are the number of packs of a VOBU (Video Object Unit), and an end address of an I (Intra) picture from the top of the VOBU, a playback time of the VOBU, or the like.

At the same time, the information from the aspect ratio information processing unit is transmitted to the MPU at the time of starting the recording, and the MPU prepares VOB (Video Object) stream information (STI). Here, as the STI, resolution data, aspect ratio data, and the like are stored, and at the time of playback, initial settings are carried out on the basis of the information the respective decoder units.

In the recording and playback apparatus, a video file is to be one file per one disk. Further, in order to continue playing-back without being interrupted during the time of accessing (seeking) data, an information unit (size) which is at least continued to be played back has been determined. This unit is called a CDA (Contiguous Data Area). A CDA size is the multiple of an ECC (error correction code) block (16 sectors), and in the file system, recording is carried out in CDA units.

The D-PRO unit 14 receives data in VOBU units from the formatter 19 of the encoder unit 15, and supplies data in CDA units to the disk drive unit 12 or the HDD unit 13.

Furthermore, the MPU of the microcomputer block 17 prepares management information needed for playing-back the recorded data, and recognizes a command to terminate data recording, and thereafter, the MPU transmits the prepared management information to the D-PRO unit 14. In accordance therewith, the management information is recorded on the optical disk 11 or the hard disk 13a.

Therefore, when encoding is being carried out, the MPU of the microcomputer block 17 receives information in data units (bracketed information or the like) from the encoder unit 15. Further, the MPU of the microcomputer block 17 recognizes the management information (file system) read from the optical disk 11 or the hard disk 13a at the time of starting the recording, recognizes unrecorded areas of the respective disks, and sets the recorded areas on the data to the disks via the D-PRO unit 14.

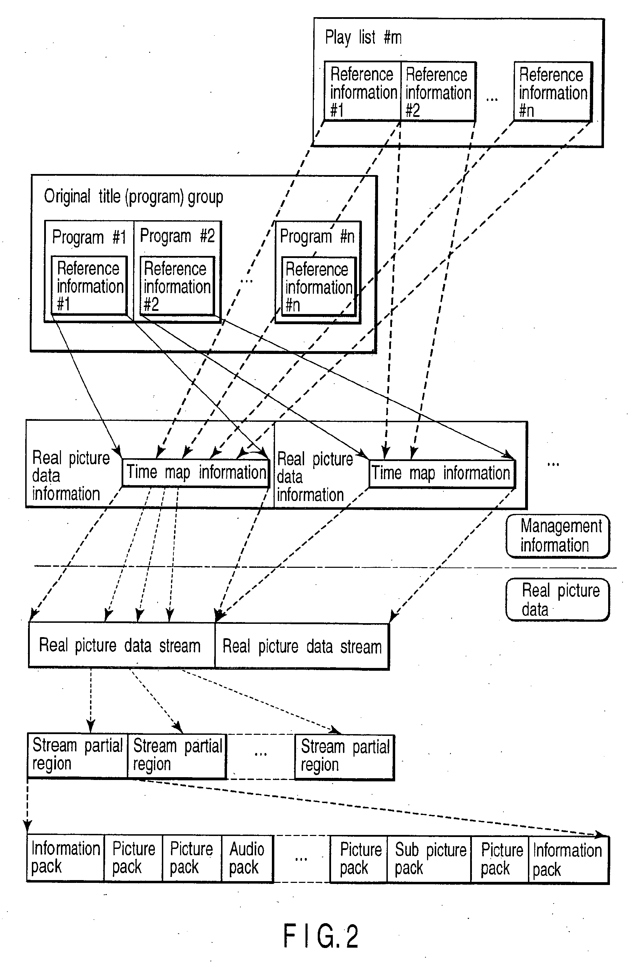

Next, the relationship between the management information and the real picture data which are the contents will be simply described with reference to FIG. 2. In FIG. 2, first, the real picture data will be described. Here, suppose that the real picture data are collected into one file on the recording medium.

The one file is configured by one or a plurality of real picture data streams. Individual real picture data stream may be a unit to be recorded in, for example, one time recording processing. This corresponds to a VOB (Video Object) in the DVD-VR standard, or the like.

One real picture data stream is configured by one or a plurality of stream partial regions. This corresponds to, for example, a VOBU (Video Object Unit) in the DVD-VR standard, a GOP (Group Of Picture) in the MPEG2 standard, or the like. One stream partial region is configured by a plurality of packs. As the plurality of packs, there are information packs, picture packs, audio packs, and the like. Sub picture packs may exist.

The information pack corresponds to, for example, an RDI pack in the DVD-VR standard, or the like. In this case, information showing a start time of playing-back the first field of a VOBU in which the information pack is included, information showing a recording time of the VOBU, manufacturer information (MNFI), and the like are included in the information pack. In addition, the information pack includes display control information (DCI) and copy control information (CCI). The display control information shows aspect ratio information, subtitle mode information, and film camera mode information. The copy control information includes copy authorizing information or copy protecting (unauthorizing) information.

The picture pack is one into which video data is compressed in accordance with the system of MPEG2, and is configured by pack header, packet header, and video data portions. The audio pack is one in which audio data is processed in accordance with a system of the linear PCM, the MPEG, the AC-3, or the like, and is configured by pack header, packet header, and audio data portions.

Next, the management information will be described. Original title (program) information which is information for managing the order of playing-back the real picture data (playback order information) is defined in the management information. This corresponds to, for example, a program in the DVD-VR standard, or the like.

Reference information is defined in individual original title information (or program information), and this links with real picture data information which is information relating to the real picture data which will be objects to be played-back. Those correspond to, for example, cell and video object information (VOBU) in the DVD-VR standard.

In this way, an original title (program) has the information for managing the order of playback (playback order information) and the real picture data thereof itself, and usually, at the time of recording, this title is prepared.

In contrast thereto, there are cases in which a title.is configured by only information for managing the order of playback (playback order information). This is the play list information, and for example, a play list in the DVD-VR standard, or the like corresponds thereto.

The play list information has no real picture data thereof, and as shown in FIG. 2, the play list information is prepared as a play list by editing (deleting, adding) the reference information linking with the real picture data information of the original title.

Time map information is described in the real picture data information. This time map information designates partial regions configuring an real picture data stream corresponding to the real picture data information.

A link from the original title information in the management information or the reference information in the play list information to the real picture data information is specified in accordance with a logical address. Further, a link from the time map information to the real picture data stream and the partial regions thereof is established on the basis of a number of the real data stream, the number of the partial regions in the stream, an entry number with respect to each partial region, and a logical address with respect to individual partial region.

In accordance with such a configuration, not only the normal playback of recorded picture data, but also a special playback such as double-speed/slow-motion playback or reverse playback, and further, a search for a scene or the like can be handled.

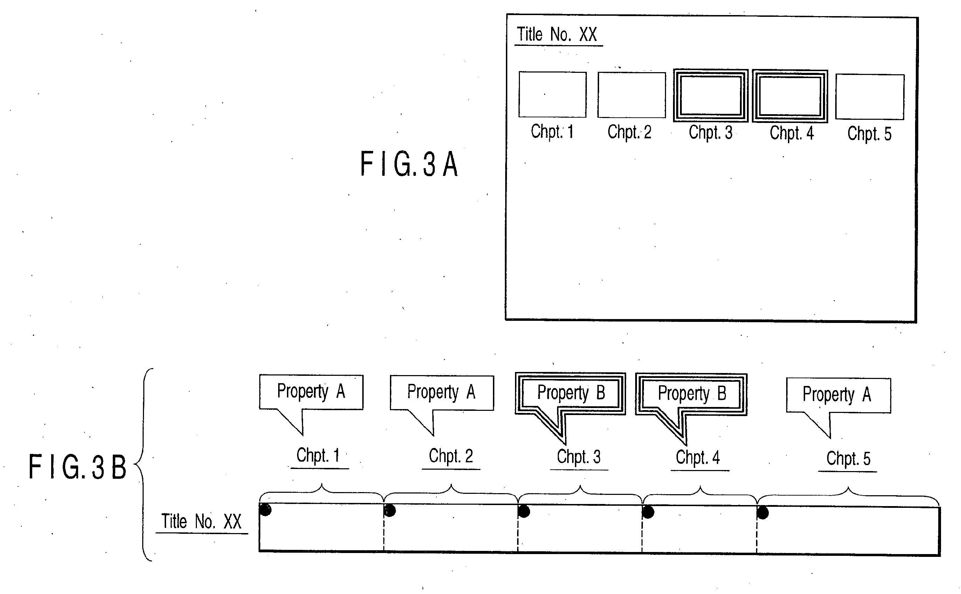

Hereinafter, operations of the recording and playback apparatus will be described with reference to the drawings from FIGS. 3A and 3B on. However, in the following descriptions, suppose that the recording and playback apparatus uses a configuration as follows.

First, suppose that the recording and playback apparatus is an optical disk recording and playback apparatus in accordance with the DVD-recording standard (DVD-VR standard). Further, suppose that the recording and playback apparatus is a hybrid recording playback device having two recording media of the optical disk 11 and the hard disk 13a, and dubbing of image information between the optical disk 11 and the hard disk 13a can be carried out.

Further, recording onto the optical disk 11 has, not only a function of recording on DVD-RAMs or the like in accordance with the DVD-VR standard, but also a function of recording on DVD-Rs, DVD-RWs, or the like in accordance with the DVD-video video standard.

In the recording and playback apparatus, suppose that partial regions in the recorded title are called chapters. Moreover, the chapter uses an entry point (EP) defined by the DVD-VR standard set in the title as a marker of the boundary thereof.

Namely, a zone between an EP and an EP which are set in the title is made to be a chapter, and suppose that the attribute information of the chapter is stored in accordance with the EP standing at the start point of the chapter.

Note that, suppose that the start point and the end point of a title are boundaries of a chapter independently of the presence/absence of an EP. Therefore, with respect to the first chapter of a title, there is the possibility that an EP does not stand at the start point. However, in the matter of providing the attribute information of a chapter, an EP is set to the start point of the first chapter, or, particular attribute information may be stored with respect to only the first chapter.

Note that recording onto the hard disk 13a is not based on the DVD-VR standard. However, the attribute information of the chapter in the present embodiment is stored so as to correspond to particular chapter boundary information which will be a marker of the chapter boundary.

Namely, an object to which the attribute. information of the chapter in the present embodiment is applied is not limited to only the DVD-VR standard, but also with respect to the partial regions defined in the recorded title, the attribute information of the chapter can be applied so as to correspond to the boundary information of the partial region or information defining a range of the partial region or the like.

FIGS. 3A and 3B are diagrams showing a concept of the present embodiment. In FIG. 3B, a concept of a title and chapters which are partial regions of the title is shown.

Further, FIG. 3A shows an example of a screen on which a list of the chapters included in the title is displayed. Here, the list of the chapters is displayed by indicating thumbnails of representative screens of the respective chapters.

As shown in FIGS. 3A and 3B, there is provided the feature that attribute information showing the characteristics of the respective chapters are provided to the chapters in the title, and various processings are carried out by sorting the attribute information set to the respective chapters.

In FIGS. 3A and 3B, as an example, in order for a user to easily distinguish chapters with specific attribute information, the thumbnails of the chapters with specific attribute information are framed and displayed.

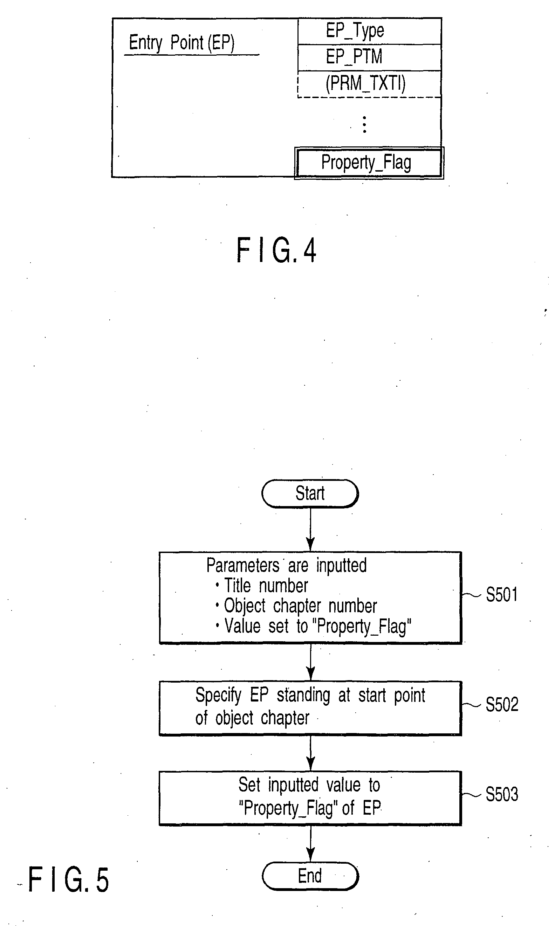

FIG. 4 shows an example of attribute information. Here, the attribute information is provided so as to correspond to an entry point (EP) in accordance with the DVD-VR standard standing at the start point of individual chapter in the title recorded in the recording and playback apparatus. This drawing shows a data structure which an EP has.

EP_Type shows whether or not the EP has text information. EP_PTM shows positional information in the title to which the EP is set. Here, it is shown in a form of time information with the start point of the title being a base point.

PRM_TXTI is provided in a case where it is shown by the above-described EP_Type that the EP has text information, and the text information is accommodated therein. In some cases, this is used for storing a name applied to a chapter when an EP is used as a marker of the chapter boundary. These three data are established by the DVD_VR standard.

Property_Flag is data particularly defined in the recording and playback apparatus of the present embodiment. This is flag information used when attribute information is set to a chapter, and has a sufficient number of bits so as to be able to be sorted into at least two or more types.

In addition to those data, particular information can be made to correspond to an EP for the purpose other than the contents described in the present embodiment. However, when the particular information below the DVD-VR standard are stored on a recording medium, the particular information must be stored in a form different from that of the data defined in accordance with the DVD-VR standard.

Note that recording onto the hard disk 13a is not based on the DVD-VR standard. However, suppose that the Property_Flag is defined so as to correspond to the particular chapter boundary information which will be a marker of the chapter boundary. However, in the following description, in order to simplify the description, all the information used as the markers of chapter boundaries are called entry points (EP).

As one technique of setting attribute information to the chapters, the aforementioned Property_Flag is used. Namely, the attribute information are set to the chapters which are the partial regions in the title by setting values to the Property_Flags, and by sorting the chapters in accordance with the values set to the Property_Flags, the chapters which are the partial regions in the title are sorted on the basis of the attribute information. In accordance with the technique of providing attribute to the chapters by using the Property_Flags, the text information in the EP can be utilized in a form independently of sorting chapters.

Further, as another technique of setting attribute to the chapters, there is a technique of using the aforementioned EP_Type showing the presence/absence of the text information. Namely, attribute information are set to the chapters which are the partial'regions in the.title by setting text information to the EPs standing at the start points.of the chapters, and by sorting the chapters in accordance with the presence/absence of text information by the values set to the EP_Types, the chapters which are the partial regions in the title are sorted on the basis of the attribute information.

Therefore, because the aforementioned Property_Flags are not used when attributes are set to the chapters by using EP_Types, the Property_Flags are fallen into disuse. In accordance with the technique of providing attribute to the chapters by using the EP_Types, for example, a definition of data below the standard is unnecessary in the recording and playback apparatus in accordance with the DVD-VR standard. There is no need to add new data for describing attribute information in the recording and playback apparatus dependent on a particular data structure, and it is sufficient that a mechanism in which the presence/absence of text information which has been broadly used already is interpreted in another form is merely provided.

Furthermore, as an even another technique of setting attribute to the chapters, there is a technique of using the aforementioned PRM_TXTI in which text information is accommodated as well. Namely, attribute information are set to the chapters which are the partial regions in the title by setting text information of specific character string to the EPs standing at the start points of the chapters, and by sorting the chapters in accordance with the presence/absence of the specific character string described in the PRM_TXTIs, the chapters which are the partial regions in the title are sorted on the basis of the attribute information.

Therefore, when attribute are set to the chapters by using PRM_TXTIs, because the aforementioned Property_Flags are not used, the Property_Flags are fallen into disuse. In accordance with the technique of providing attribute to the chapters by using the PRM_TXTIs, for example, a definition of data below the standard is unnecessary in the recording and playback apparatus in accordance with the DVD-VR standard. There is no need to add new data for describing attribute information in the recording and playback apparatus dependent on a particular data structure, and it is sufficient that a mechanism in which the presence/absence of a specific character string is interpreted is merely provided with respect to text information which has been broadly used already.

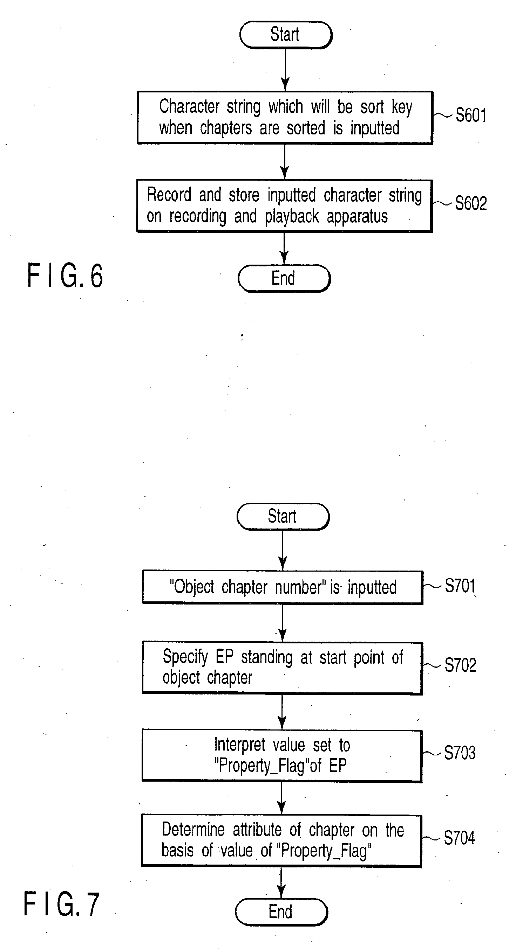

FIG. 5 shows processing operations of setting the attribute information to the chapters by using the Property_Flags. First, in step S501, parameters needed for carrying'out the processing are inputted. Here, a title number for specifying a title of a processing object, a chapter number for specifying a chapter of a processing object in the title, and a value of attribute information provided to the chapter, i.e., a value provided to the Property_Flag shown in FIG. 4 are inputted.

In the following step S502, an entry point (EP) standing at the start point of the chapter specified by the inputted chapter number is specified. Finally, in step S503, the value of the attribute information inputted above to the Property Flag corresponding to the EP is set to the EP specified in step S502, and the processing is completed.

Note that, in the recording and playback apparatus, suppose that the inputting of the parameters in the above-described step S501 is carried out as shown hereinafter. For example, suppose that those parameters are inputted by operating the key input unit 30 shown in FIG. 1 by a user.

Alternatively, the above-described parameters may be inputted on the basis of the information fed-back to the microcomputer block 17 via a route (not shown) on the basis of the signal detected by the A/V input unit 20 or the TV tuner unit 21 shown in FIG. 1. Concretely, for example, there is an example in which switching of a main program and a CM is detected on the basis of switching of audio signals to be mono/stereo of, and a chapter boundary is set at the portion of the switching, and moreover, separate attribute information are respectively set to the main program and the CM with respect to the chapter boundary.

FIG. 6 shows processing operations of registering a specific character string which will be a key when the chapters are sorted in accordance with the presence/absence of the specific character string described in PRM TXTI. First, in step S601, a specific character string which will be a key at the time of sorting the chapters is inputted. In the following step S602, the inputted specific character string is stored on the recording and playback apparatus, and the processing is completed.

Note that, suppose that the input of a specific character string which will be a key in the step S601 is carried out, for example, by operating the key input unit 30 shown in FIG. 1 by the user. Further, suppose that the registration of the inputted specific character string is recorded, for example, on the HDD unit 13 shown in FIG. 1, and moreover, the registration of the inputted specific character string is usually stored on the work RAM 24 in order to make an access easy.

Further, due to the operations in the step S601 to step S602, the specific character string registered by the user is used as a key at the time of sorting the chapters. However, in addition thereto, the specific character string which is the sort key may be registered in advance in the recording and playback apparatus body.

FIG. 7 shows processing operations of interpreting the attribute information set to the chapters by using Property_Flags. First, in step S701, a chapter number for specifying a chapter which will be processing object is inputted.

Next, in step S702, an entry point (EP) standing at the start point of the objective chapter is specified. Next, in step S703, a value of the attribute information set to the Property_Flag corresponding to the EP is interpreted with respect to the EP specified in step S702.

Finally, in step S704, the attribute of the chapter to be processed is determined on the basis of the value set to the Property_Flag, and the processing is completed.

In this way, due to the mechanism which is Property_Flag being used independently of text information, it is possible to sort and process the chapters on the basis of a difference in the attribute information thereof independently of setting of a chapter name. Note that concrete processings using the attribute information of the chapters obtained here will be described later.

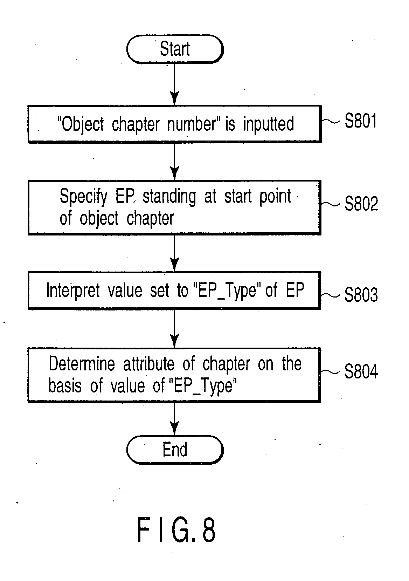

FIG. 8 shows processing operations of interpreting the attribute information set to the chapters by using EP_Types. First, in step S801, a chapter number for specifying a chapter to be processing object is inputted. Next, in step S802, an entry point standing at the start point of the objective chapter is specified.

Next, in step S803, a value set to EP_Type of the EP specified in step S802 is interpreted. Finally, in step S804, the attribute of the chapter to be processed is determined on the basis of the value set to the EP_Type,i.e., in accordance with the presence/absence, of text information, and the processing is completed.

In this way, due to the mechanism in which the presence/absence of text information is interpreted as the difference in attribute information, it is possible to sort and process the chapters on the basis of a difference in the attribute information without adding new data for the attribute information.

For example, when a play list in which only necessary chapters are collected is prepared, due to a chapter name being not provided to an unnecessary chapter, it is possible that only named chapters are extracted and registered with the play list. Note that the concrete processing using the attribute information of the chapters obtained here will be described later.

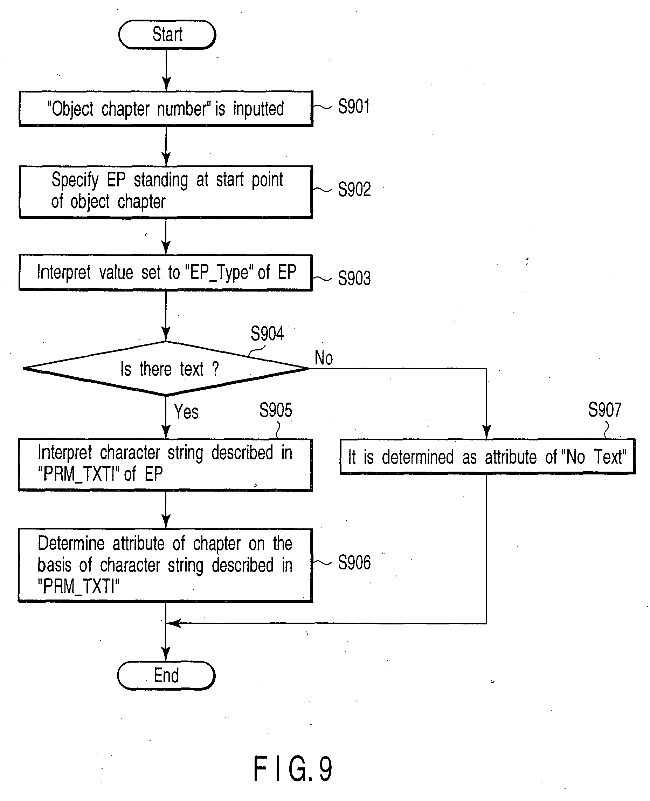

FIG. 9 shows processing operations of interpreting the attribute information.set to the chapters by the technique of registering a specific character string which will be a key at the time of sorting the chapters with PRM_TXTI. First, in step S901, a chapter number for specifying a chapter which will be a processing object is inputted.

Next, in step S902, an entry point (EP) standing at the start point of the objective chapter is specified. Next, in step S903, a value set to an EP_Type of the EP specified in step S902 is interpreted.

In the following step S904, the processing is diverged in accordance with whether or not the aforementioned EP has text information with respect to the value of the EP_Type interrupted in step S903. When the aforementioned EP does not have text information, the processing proceeds to step S907, and an attribute of the chapter is determined as "without text information", and the processing is completed.

On the other hand, when the aforementioned EP has text information, the processing proceeds to step S905, and a specific character string described in a PRM_TXTI of the EP is interpreted. At that time, the specific character string registered in the recording and playback apparatus by the processing operations described above in FIG. 6, or the specific character string registered in advance in the recording and playback apparatus is used as a sort key.

Finally, in step S906, an attribute of the chapter to be processed is determined on the basis of a compared result of the character string described in the aforementioned PRM TXTI and the specific character string which is a sort key, and the processing is completed.

In this way, due to the mechanism in which the attribute information is determined on the basis of a specific character string described as text information, it is possible to sort and process the chapters on the basis of a difference in the attribute information without adding new data for the attribute information.

For example, a mechanism in which such that a received television broadcast signal is analyzed, and due to a point of changing an audio signal to be mono/stereo being detected, a chapter division is carried out at a switching position of a main program and a CM, and at the same time, a chapter name which is "CM" is automatically provided to the chapter of the CM portion has been provided in advance.

In accordance therewith, it is possible that the chapters including the specific character string which is "CM" are collectively deleted,'or the chapters which do not include the specific character string which is "CM" are extracted and registered with a play list. Note that the concrete processing using the attribute information of the chapters obtained here will be described later.

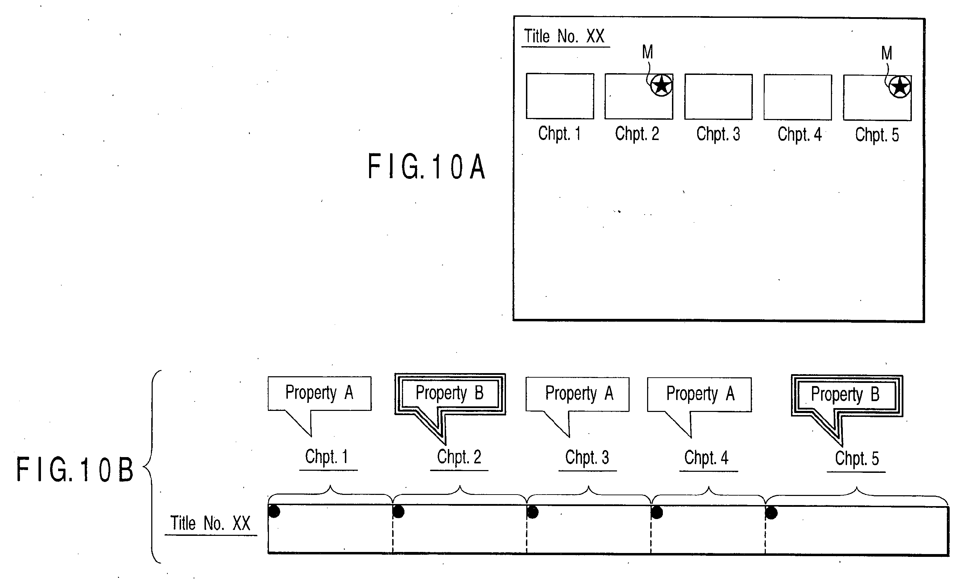

Hereinafter, from FIGS. 10A and 10B on, examples relating to the concrete processings using the attribute information of the chapters are described. FIGS. 10A and 10B to 12 describe means for displaying such that the user can recognize differences in the attribute information by using the attribute information of the chapters.

FIGS. 10A and 10B show one example in which the chapters are displayed such that differences in the attribute of each chapter can be recognized on the basis of the attribute information set to each chapter in the title by the three types (Property_Flag, EP_Type, PRM_TXTI) of means described above.

In FIGS. 10A and 10B, in order to easily distinguish the chapters with specific attribute information among the attribute information set to the respective chapters, when a list of the chapters in the title is displayed on the screen, marks M are appended on the thumbnails of the chapters with specific attribute information, and are displayed.

For example, there is an example of a concrete example in which, when the attribute information are set to the chapters by.using PRM_TXTI, "CM mark"s are indicated on the thumbnails of the chapters in which a specific character string which is "CM" is described in the text information among the chapters included in the recorded title. Note that, in FIGS. 3A and 3B described above, an example is shown in which frames are appended to the thumbnails of the chapters with specific attribute information in place of the marks M, and are displayed.

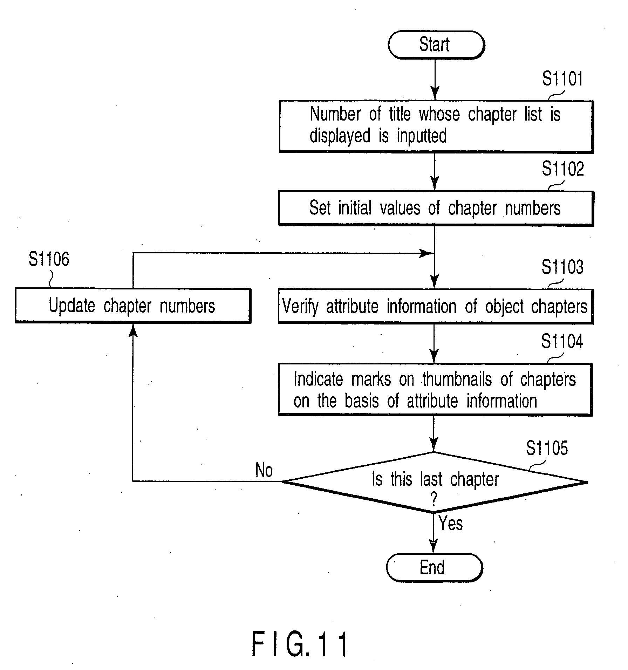

FIG. 11 shows processing operations of displaying a difference in the attribute of each chapter so as to be recognizable on the basis of the attribute information set to each chapter in the title by the three types (Property_Flag, EP_Type, PRM_TXTI) of means described above.

First, in step S1101, a number of a title which is an object in which a list-display of chapters is carried out is inputted. Next, in step S1102, initial values of chapter numbers to be displayed are set.

Due to the design specification of the recording and playback apparatus, because the number of the thumbnails of the chapters which can be displayed, within the screen is limited, when there are many chapters in the title, all of the chapter thumbnails cannot be displayed at a time, and there is no choice but to take a mode in which the thumbnails are displayed by several thumbnails by using the so-called page-turning mechanism. Therefore, the initial values of the chapter numbers in step S1102 are to be a number of the first chapter in the chapter group in units of several chapters which are displayed at a time.

Next, in step S1103, the attribute information of the chapters which will be objects are verified. This is realized by the processing operations described above in FIGS. 7 to 9. In the following step S1104, marks are indicated on the thumbnails of the chapters on the basis of the interpreted attribute information of the chapters.

Here, as shown above in FIG. 10A, marks M may be indicated on the thumbnails of the chapters with specific attribute information. Or, separate marks may be indicated with respect to the thumbnails of all the chapters on the basis of a difference in the attribute information. Further, marks may be indicated on the basis of, not only the logic of "selection" that some specific information is provided, but also the logic of "rejection" that some specific information is not provided.

Next, in step S1105, the processing is diverged in accordance with whether or not the chapter to be processed is the last chapter. As described above, because the number of the thumbnails of the chapters which can be displayed within the screen is limited due to the design specification of the recording and playback apparatus, the last chapter described here shows the last chapter in the chapter group in units of several chapters which are displayed at a time.

When it is determined that the chapter to be processed is not the last chapter yet in the step S1105, the processing proceeds to step S1106, the chapter number is updated, and the processing operations described above in step S1103 to step S1105 are applied to the new chapter. Further, when it is determined that the chapter is the last chapter, a series of the processing operations are entirely completed.

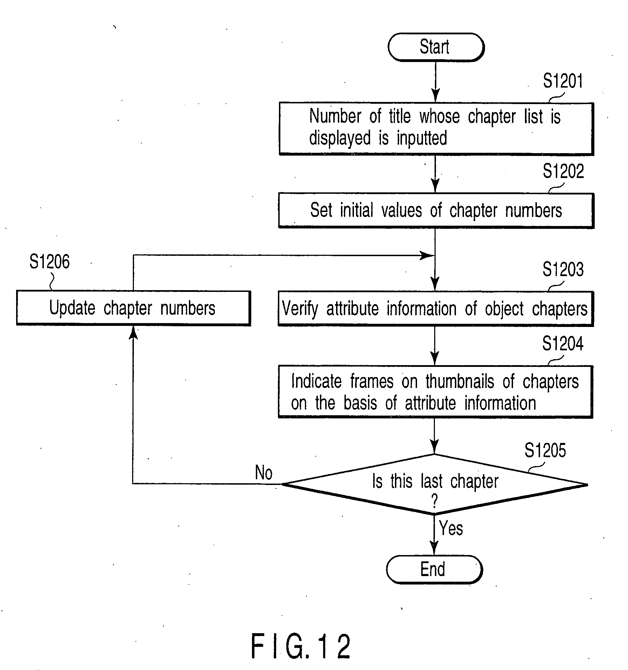

FIG. 12 shows other processing operations of displaying a difference in the attribute of each chapter so as to be recognizable on the basis of the attribute information set to each chapter in the title by the three types (Property_Flag, EP_Type, PRM_TXTI) of means described above.

First, in step S1201, a number of the title which is an object in which a list-display of chapters is carried out is inputted. Next, in step S1202, initial values of the chapter numbers to be displayed are set. The initial values of the chapter numbers are as described above in step S1102 of FIG. 11.

Subsequently, in step S1203, the attribute information of the chapters which will be objects are verified. This is realized by the processing operations described above in FIGS. 7 to 9. In the following step S1204, frames are indicated on the thumbnails of the chapters on the basis of'the interpreted attribute information of the chapters.

Here, as shown above in FIG. 3A, frames may be indicated on the thumbnails of the chapters with specific attribute information. Or, frames whose colors, patterns, or the like are made different from each other on the basis of a difference in the attribute information may be indicated on the thumbnails of all the chapters. Further, frames may be indicated on the basis of, not only the logic of "selection" that some specific information is provided, but also the logic of "rejection" that some specific information is not provided.

Next, in step S1205, the processing is diverged in accordance with whether or not the chapter to be processed is the last chapter. This last chapter is as described above in step S1105 of FIG. 11.

When it is determined that the chapter is not the last chapter yet in the step S1205, the processing proceeds to step S1206, the chapter number is updated, and the processing operations in step S1203 to step S1205 described above are applied to the new chapter. Further, when it is determined that the chapter is the last chapter, a series of the processing operations are entirely completed.

In accordance with a series of the processing operations in FIG. 11 or 12 described above, because differences in the attribute information of the chapters in addition to the thumbnails of the chapters are visualized and displayed, it is easy to determined what characteristic the chapter has, and whether the chapter is a necessary chapter or an unnecessary chapter, and the convenience of the user is improved.

Note that, in the examples described by using FIGS. 3A, 3B, 10A, and 10B to 12; a list-display of the chapters is carried out by indicating the thumbnails of the chapters. However, it goes without saying that this is not limited to the thumbnail display, and can be applied to a chapter list-display without using the thumbnails.

For example, in a list-display of the chapters by indicating character strings such as chapter names and chapter numbers, on the basis of differences in the attribute information of the chapters, it can be realized in a mode in which the colors of the character strings or the colors of the backgrounds of the character strings are made different from each other and indicated, or it can be realized in a mode in which marks are indicated beside the character strings.

Further, a list-display of the chapters in accordance with the examples described by using FIGS. 3A, 3B, 10A, and 10B to 12 can be realized, for example, in a mode in which the recorded contents are list-displayed, or may be a list-display of the chapters as a display of a parts list which can be registered with the play list at the time of editing the play list.

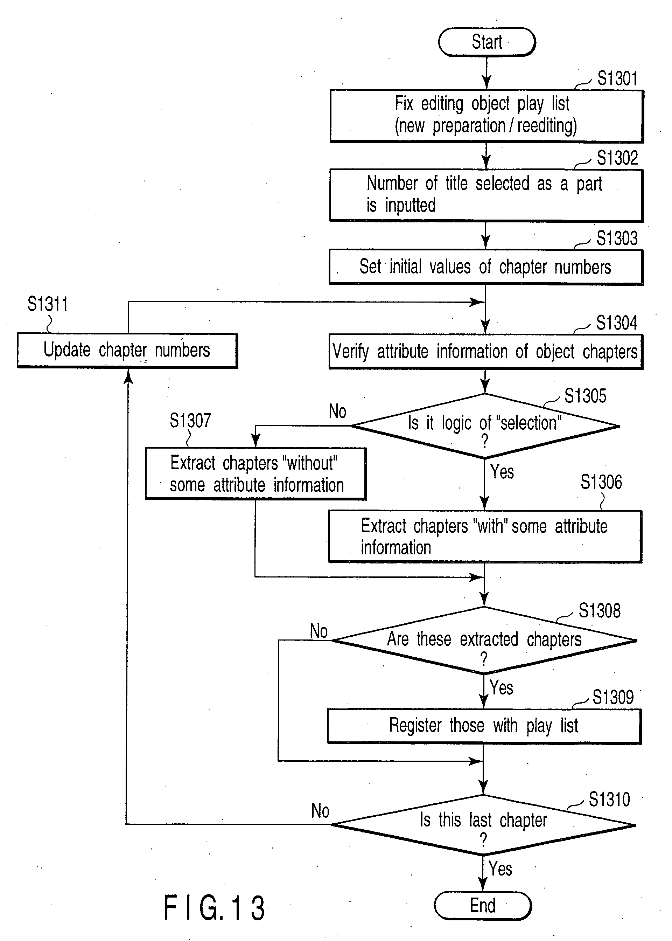

FIGS. 13 to 23 describe means for carrying out processings which are the same level as even more complicated editing operations by simple operations carried out by the user by utilizing attribute information of the chapters. First, FIGS. 13 to 20 show examples of a case where editing processings are collectively applied with respect to a plurality of chapters in one title which exist and which have the same attribute.

FIG. 13 shows processing operations of sorting the chapters in the title in accordance with differences in the attribute information, and of automatically carrying out parts registration with a play list, on the basis of the attribute information set to each chapter in the title by the three types (Property_Flag, EP_Type, PRM_TXTI) of means described above.

First, in step S1301, a play list which is an editing object is ensured. When the play list is newly prepared, a new play list is ensured, and the title numbers thereof are made to be editing objects. Further, when an existing prepared play list is reedited, the title numbers in the play list to be reedited are made to be editing objects.

Next, in step S1302, a number of the title selected as a part is inputted. This editing function is configured such that only necessary chapters are automatically extracted and registered with the play list due to the processings from step 51303 on which will be described hereinafter. Therefore, in the step S1302, it is sufficient that the user designates only the title number as a part, and there is no need to designate the chapters to be registered as a part included in the title one by one.

Subsequently, in step S1303, a number of the first chapter which will be a processing object among the chapters included in the title inputted at the above-described step S1302 is set. Usually, if all of the chapters in the title are made to be objects, it is recommended that the first chapter be an initial value. Attribute information of the chapter to be an object is verified. Further, provided that some chapters in the title are made to be objects, a number of the first chapter among the chapters included within the objective range can be made to be the initial value.

In the following step S1304, the attribute information of the chapters which will be objects are verified. This is realized by the processing operations described above in FIGS. 7 to 9. Next, in step S1305, the processing is diverged in accordance with how the attribute information of the chapters verified in the step S1304 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1306, and the chapters with some attribute information are extracted. Concretely, for example, there is an example of processing in which the chapters having chapter names set thereto are extracted.

Further, if it is based on the logic of "rejection", the processing proceeds to step S1307, and the chapters without some attribute information are extracted. Concretely, for example, there is an example of processing in which the chapters having the specific character string that is "CM" described therein as text information are not extracted.

Next, in step S1308, the processing is diverged in accordance with whether or not the chapter which is a current processing object is a chapter extracted in step S1306 or step S1307.

When the chapter which is a current processing object is a chapter extracted in step S1306 or step S1307, the processing proceeds to step S1309, and the chapter is registered as a part with the play list which is an editing object.

In contrast thereto, when the chapter which is a current processing object is not a chapter extracted in the step S1306 or step S1307, step S1309 is skipped, and the chapter is not registered as a part with the play list.

In the following step S1310, the processing is diverged in accordance with whether or not the chapter to be processed is the last chapter. Usually, if all of the chapters in the title are made to be objects; it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S1310, the processing proceeds to step S1311, the chapter number is updated, and the processing operations in step S1304 to step S1310 are applied to the new chapter. Further, when it is determined that the chapter is the last chapter, a series of the processing operations are entirely completed.

In accordance with a series of the processing operations described in FIG. 13, when a play list is newly prepared or reedited, only necessary chapters are automatically registered as parts with the play list by merely designating only the title as a part by the user. In accordance therewith, an editing result which is the same as in a case where a play list is constructed by collecting necessary parts one by one can be realized with simple operations, and the ease of operation of the user is improved.

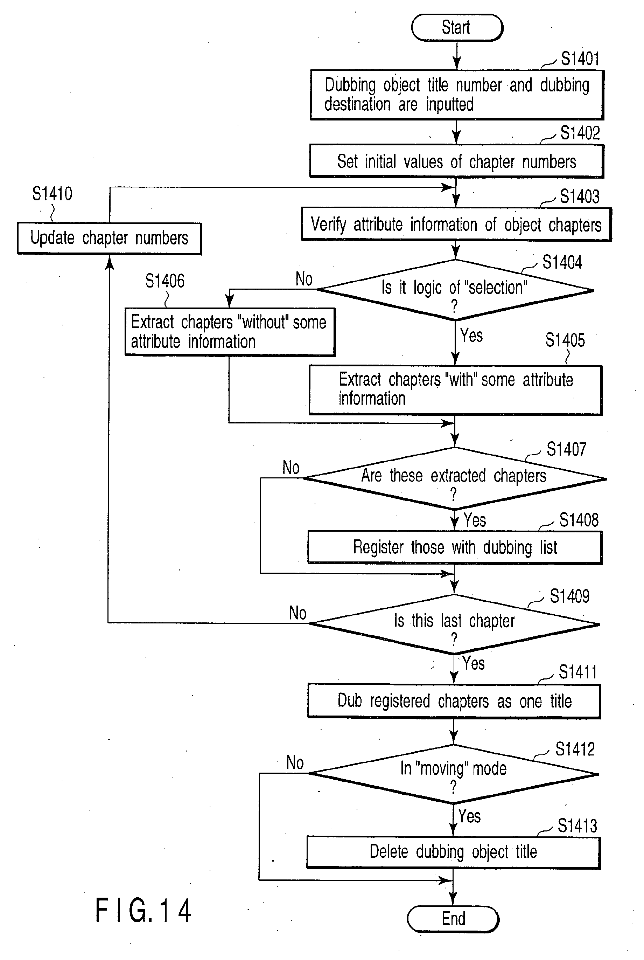

FIG. 14 shows processing operations of sorting the chapters in the title in accordance with differences in the attribute information on the basis of the attribute information set to each chapter in the title by the three types (Property_Flag, EP_Type, PRM_TXTI) of means described above, and of dubbing those as one title.

First, in step S1401, a number of the title which is a dubbing object is inputted. Further, in addition thereto, media which are dubbing destinations are designated. This editing function is configured such that only necessary chapters are automatically extracted and dubbed by the processings from step S1402 on.

Therefore, in the step S1401, it is sufficient that the user merely designates only a number of the title which is a dubbing object, and there is no need to designate the chapters which are dubbing objects included in the title one by one.

Further, as the dubbing destinations, separate media are designated as the dubbing destinations such that the contents on the hard disk 13a are dubbed onto the optical disk 11 or the contents on the optical disk 11 are dubbed onto the hard disk 13a by using the two types of disk drive units shown in FIG. 1 which the recording and playback apparatus has.

Moreover, the contents on the hard disk 13a and the optical disk 11 can be respectively dubbed onto the same media. Concretely, there is an example of processing in which a play list is made to be an original title on the same media by appropriating a mechanism of dubbing. In such a case, the disk drive unit on which the contents to be dubbed have been recorded is designated as a dubbing destination.

Next, in step S1402, a number of the first chapter which will be a processing object among the chapters included in the title inputted in the step S1401 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S1403, the attribute information of the chapters which will be objects are verified. This is realized by the processing operations described above in FIGS. 7 to 9. Next, in step S1404, the processing is diverged in accordance with how the attribute information of the chapters verified in the step S1403 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1405, and the chapters with some attribute information are extracted. Concretely, for example, there is an example of processing in which the chapters having chapter names set thereto are extracted.

Further, if it is based on the logic of "rejection", the processing proceeds to step S1406, and the chapters without some attribute information are extracted. Concretely, for example, there is an example of processing in which the chapters having the specific character string that is "CM" described therein as text information are not extracted.

Next, in step S1407, the processing is diverged in accordance with whether or not the chapter which is a current processing object is a chapter extracted in the step S1405 or step S1406.

If the chapter which is a current processing object is a chapter extracted in the step S1405 or step S1406, the processing proceeds to step S1408, and the chapter is registered with the dubbing list in which dubbing objects are described.

In contrast thereto, when the chapter which is a current processing object is not a chapter extracted in step S1405 or step S1406, step S1408 is skipped, and the chapter is not registered with the dubbing list.

In the following step S1409, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S1409, the processing proceeds to step S1410, the chapter number is updated, and the processing operations in step S1403 to step S1409 are applied to the new chapter. Further, when it is determined that the chapter is the last chapter, the processing proceeds to step S1411.

In the following step S1411, the chapters registered with the dubbing list in the step S1408 are collected into one title, and are dubbed. Next, in step S1412, the processing is diverged in accordance with whether the dubbing processing is a "moving" system in which the title which is a dubbing object is deleted or a "copy" system in which the title which is a dubbing object is stored as is.

If it is the dubbing by the "moving" system, the processing proceeds to step S1413, and the title which is a dubbing object is deleted. At that time, the title which is a dubbing object may be deleted so as to include the aforementioned chapters which have not been registered with the dubbing list, or, the aforementioned chapters which have not been registered with the dubbing list may be not deleted and left. Further, when it is not the dubbing by the "moving" system, step S1413 is skipped, and a series of the processing operations are entirely completed.

In accordance with a series of the processing operations described in FIG. 14, when dubbing is carried out, only necessary chapters are automatically collected into one title and dubbed by merely designating only the title by the user. In accordance therewith, an editing result which is the same as in a case where dubbing is carried out by collecting necessary chapters one by one and those are collected into one title can be realized with simple operations, and the ease of operation of the user is improved.

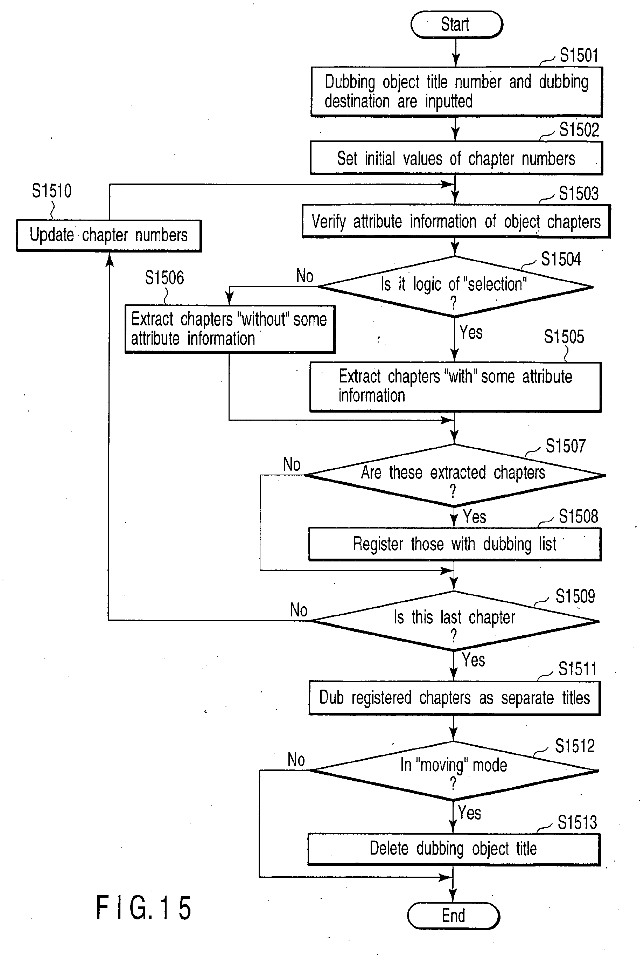

FIG. 15 shows processing operations of sorting the chapters in the title in accordance with differences in the attribute information, and of automatically dubbing those as respectively separate titles, on the basis of the attribute information set to each chapter in the title by the three types (Property_Flag, EP_Type, PRM_TXTI) of means described above.

First, in step S1501, a number of the title which is a dubbing object is inputted. Further, in addition thereto, media which are dubbing destinations are designated. This editing function is configured such that only necessary chapters are automatically extracted and dubbed by the processings from step S1502 which will be described hereinafter on.

Therefore, in the step S1501, it is sufficient that the user merely designates only a number of the title which is a dubbing object, and there is no need to designate the chapters which are dubbing objects included in the title one by one.

Further, as the dubbing destinations, separate media are designated as the dubbing destinations such that the contents on the hard disk 13a are dubbed onto the optical disk 11 or the contents on the optical disk 11 are dubbed onto the hard disk 13a by using the two types of disk drive units which the recording and playback apparatus shown in FIG. 1 has.

Moreover, the contents on the hard disk 13a and the optical disk 11 can be respectively dubbed onto the same media. Concretely, there is an example of processing in which the play list is made to be an original title on the same media by appropriating the mechanism of dubbing. In such a case, the disk drive unit on which the contents to be dubbed are recorded are designated as the dubbing destinations.

Next, in step S1502, a number of the first chapter which will be a processing object among the chapters included in the title inputted in the step S1501 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S1503, the attribute information of the chapters which will be objects are verified. This is realized by the processing operations described above in FIGS. 7 to 9. Next, in step S1504, the processing is diverged in accordance with how the attribute information of the chapters verified in the step S1503 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1505, and the chapters with some attribute information are extracted. Concretely, there is an example of processing in which the chapters having chapter names set thereto are extracted.

Further, if it is based on the logic of "rejection", the processing proceeds to step S1506, and the chapters without some attribute information are extracted. Concretely, for example, there is an example of processing in which the chapters having the specific character string that is "CM" described therein as text information are not extracted.

Next, in step S1507, the processing is diverged in accordance with whether or not the chapter which is a current processing object is the chapter extracted in the step S1505 or step S1506.

When the chapter which is a current processing object is the chapter extracted in the step S1505 or step S1506, the processing proceeds to step S1508, and the chapter is registered with the dubbing list in which dubbing objects are described.

In contrast thereto, when the chapter which is a current processing object is not the chapter extracted in the step S1505 or step S1506, step S1508 is skipped, and the chapter is not registered with the dubbing list.

In the following step S1509, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S1509, the processing proceeds to step S1510, the chapter number is updated, and the processing operations described above in step S1503 to step S1509 are applied to the new chapter. Further, when it is determined that the chapter is the last chapter, the processing proceeds to step S1511.

Next, in step S1511, the chapters registered with the dubbing list in the step S1508 are dubbed as respectively separate titles. Next, in step S1512, the processing is diverged in accordance with whether the dubbing processing is a "moving" system in which the title which is a dubbing object is deleted or a "copy" system in which the title which is a dubbing object is stored as is.

If it is dubbing by the "moving" system, the processing proceeds to step S1513, and the title which is a dubbing object is deleted. At that time, the title which is a dubbing object may be deleted so as to include the aforementioned chapters which have not been registered with the dubbing list, or the aforementioned chapters which have not been registered with the dubbing list may be not deleted and left. Further, when it is not the dubbing by the "moving" system, step S1513 is skipped, and a series of the processing operations are entirely completed.

In accordance with a series of the processing operations described in FIG. 15, when dubbing is carried out, by merely designating only the title by the user, necessary chapters are automatically dubbed as respectively separate titles. In accordance therewith, an editing result which is the same as in a case where necessary chapters are respectively dubbed one by one can be realized with simple operations, and the ease of operation of the user is improved.

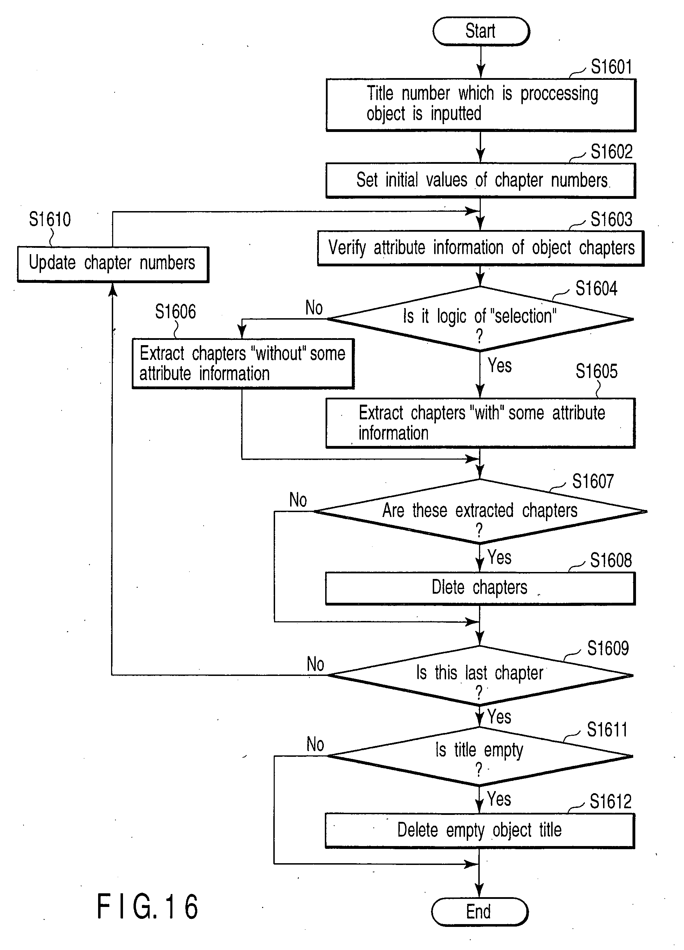

FIG. 16 shows processing operations of sorting the chapters in the title in accordance with differences in the attribute information, and of automatically deleting only chapters with some attribute, on the basis of the attribute information set to each chapter in the title by the three types (Property_Flag, EP_Type, PRM_TXTI) of means described above.

First, in step S1601, a number of the title which is a deleting object is inputted. This editing function is configured such that only specific chapters are automatically extracted and deleted by the processings from step S1602 which will be described hereinafter on. Therefore, in the step S1601, it is sufficient that the user merely designates only a number of the title which will be a deleting object, and there is no need to designate the chapters which are deleting objects included in the title one by one.

Next, in step S1602, a number of the first chapter which will be a processing object among the chapters included in the title inputted in the step S1601 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S1603, the attribute information of the chapters which will be objects are verified. This is realized by the processing operations described above in FIGS. 7 to 9. Next, in step S1604, the processing is diverged in accordance with how the attribute information of the chapters verified in the step S1603 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1605, and the chapters with some attribute information are extracted. Concretely, for example, there is an example of processing in which the chapters having chapter names set thereto are extracted.

Further, if it is based on the logic of "rejection", the processing proceeds to step S1606, and the chapters without some attribute information are extracted. Concretely, for example, there is an example of processing in which the chapters having the specific character string that is "CM" described therein as text information are not extracted.

Next, in step S1607, the processing is diverged in accordance with whether or not the chapter which is a current processing object is the chapter extracted in the step S1605 or step S1606.

When the chapter which is a current processing object is the chapter extracted in the step S1605 or step S1606, the processing proceeds to step S1608, and the chapter is deleted.

In contrast thereto, when the chapter which is a current processing object is not the chapter extracted in the step S1605 or step S1606, step S1608 is skipped, and the chapter is not deleted.

In the following step S1609, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is' the last chapter among the chapters included within the objective range.

When it is determined that the chapter is not the last chapter yet in the step S1609, the processing proceeds to step S1610, the chapter number is updated, and the processing operations described above in step S1603 to step S1609 are applied to the new chapter. Further, when it is determined that the chapter is the last chapter, the processing proceeds to step S1611.

In the following step S1611, the processing is diverged in accordance with whether or not the title to be processed is made to be empty by deleting the chapters. There is an example of a case where, for example, all the chapters included in the title to be processed have the same attribute, and are extracted in step S1605 or step S1606, and as a result thereof, all the chapters in the title are deleted.

If the title to be processed is made to be empty, the processing proceeds to step S1612, and the empty title to be processed is deleted. Further, when the title to be processed is not made to be empty, step S1612 is skipped, and a series of the processing operations are entirely completed.

In accordance with a series of the processing operations described in FIG. 16, when deleting of chapters is carried out, by merely designating only the title by the user, all the chapters with some attribute included in the title are automatically deleted. In accordance therewith, an editing result which is the same as in a case where each chapter is selected and deleted can be realized with simple operations, and the ease of operation of the user is improved.

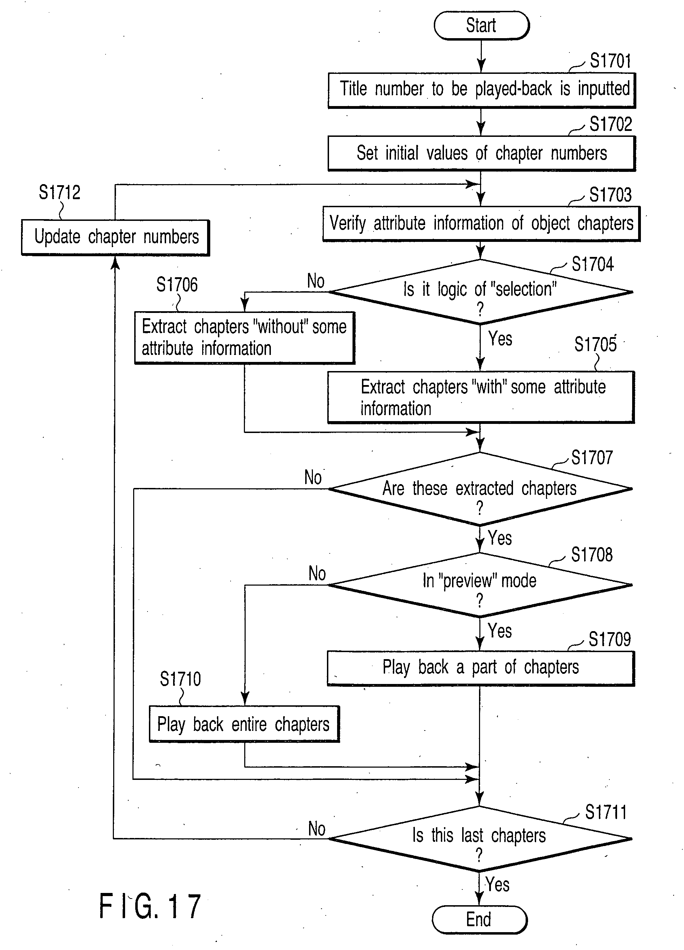

FIG. 17 shows processing operations of sorting the chapters in the title in accordance with differences in the attribute information, and of automatically deleting only chapters with some attribute, on the basis of the attribute information set to each chapter in the title by the three types (Property_Flag, EP_Type, PRM_TXTI) of means described above.

First, in step S1701, a number of the title to be played-back is inputted. This editing function is configured such that only specific chapters are automatically extracted and playback-displayed or preview-displayed by the processings from step S1702 which will be described hereinafter on. Therefore, in the step S1701, it is sufficient that the user merely designates only a number of the title to be played-back, and there is no need to designate the chapters to be played-back included in the title one by one.

Next, in step S1702, a number of the first chapter which will be a processing object among the chapters included in the title inputted in the step S1701 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S1703, the attribute information of the chapters which will be objects are verified. This is realized by the processing operations described above in FIGS. 7 to 9. Next, in step S1704, the processing is diverged in accordance with how the attribute information of the chapters verified in the step S1703 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1705, and the chapters with some attribute information are extracted. Concretely, for example, there is an example of processing in which the chapters having chapter names set thereto are extracted.

Further, if it is based on the logic of "rejection", the processing proceeds to step S1706, and the chapters without some attribute information are extracted. Concretely, for example, there is an example of processing in which the chapters having the specific character string that is "CM" described therein as text information are not extracted.

Next, in step S1707, the processing is diverged in accordance with whether or not the chapter which is a current processing object is the chapter extracted in the step S1705 or step S1706.

If the chapter which is a current processing object is the chapter extracted in the step S1705 or step S1706, the processing proceeds to step S1708. In step S1708, the processing is diverged in accordance with whether or not the chapter to be processed is played back in a "preview mode".

In a case of a "preview mode", the processing proceeds to step S1709, and only one part of the chapter is playback-displayed. Further, in a case of not a "preview mode", the processing proceeds to step S1710, and the entire chapter is playback-displayed.

Further, in the step S1707, the chapter which is a current processing object is not the chapter which was extracted in the step S1705 or step S1706, the processings in the step S1708 to step S1710 are skipped, and a playback-display of the chapter is not carried out.

Next, in step S1711, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S1711, the processing proceeds to step S1712, the chapter number is updated, and the processing operations in step S1703 to step S1711 are applied to the new chapter. Further, when it is determined that the chapter is the last chapter, a series of the processing operations are entirely completed.

In accordance with a series of the processing operations described in FIG. 17, when a playback or preview of chapters is carried out, by merely. designating only the title by the user, only the chapters with some attribute included in the title are automatically selectively playback-displayed.

In accordance therewith, even without the contents being grasped due to only the chapters with some attribute being collectively preview-displayed, or even without a play list being prepared, it is possible to obtain a result which is the same as in the display of the prepared play list due to only the chapters which are intended to be registered with the play list being collectively playback-displayed, and the ease of operation of the user is improved.

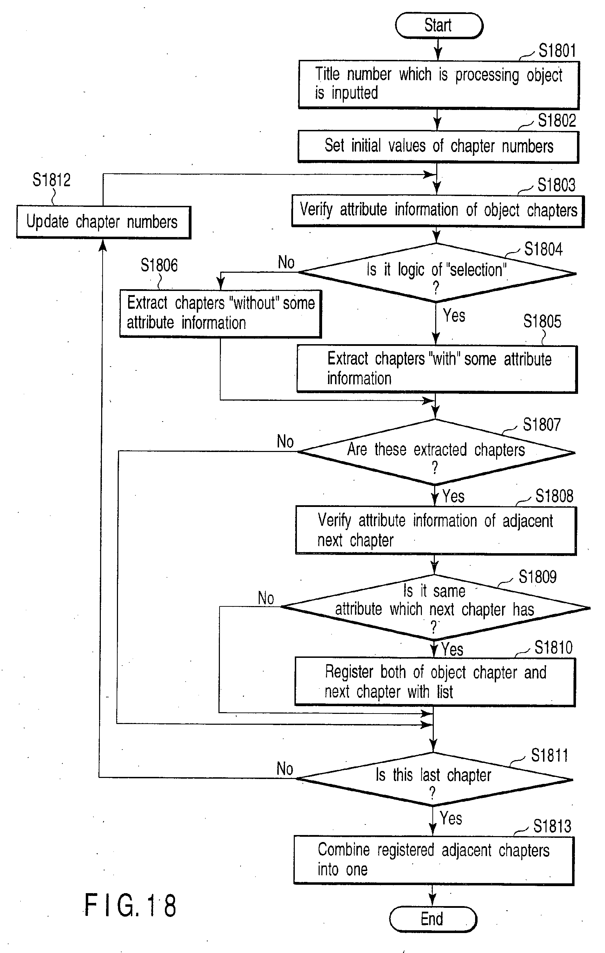

FIG. 18 shows processing operations of sorting the chapters in the title in accordance with differences in the attribute information, and of combining adjacent chapters with some attribute into one chapter, on the basis of the attribute information set to each chapter in the title by the three types (Property_Flag, EP_Type, PRM_TXTI) of means described above.

First, in step S1801, a number of the title to be processed is inputted. This editing function is configured such that only adjacent specific chapters are automatically extracted and combined by the processings from step S1802 which will be described hereinafter on. Therefore, in the step S1801, it is sufficient that the user merely designates only a number of the title to be processed, and there is no need to designate the chapters to be processed included in the title one by one.

Next, in step S1802, a number of the first chapter which will be a processing object among the chapters included in the title inputted in the step S1801 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S1803, the attribute information of the chapters which will be objects are verified. This is realized by the processing operations described above in FIGS. 7 to 9. Next, in step S1804, the processing is diverged in accordance with how the attribute information of the chapters verified in the step S1803 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1805, and the chapters with some attribute information are extracted. Concretely, for example, there is an example of processing in which the chapters having chapter names set thereto are extracted.

Further, if it is based on the logic of "rejection", the processing proceeds to step S1806, and the chapters without some attribute information are extracted. Concretely, for example, there is an example of processing in which the chapters having the specific character string that is "CM"' described therein as text information are not extracted.

Next, in step S1807, the processing is diverged in accordance with whether or not the chapter which is a current processing object is the chapter extracted in the step S1805 or step S1806.

If the chapter which is a current processing object is the chapter extracted in the step S1805 or step S1806, the processing proceeds to step S1808, and the attribute information of the next chapter adjacent to the chapter which is a current processing object is verified. This is realized by the processing operations described above in FIGS. 7 to 9.

Next, the processing proceeds to step S1809, it is determined whether or not the aforementioned chapter which is a current processing object and the next chapter adjacent thereto have the same attribute. When these two chapters have the same attribute, the processing proceeds to step S1810, and the chapter which is a current processing object and the next chapter adjacent thereto are determined as a pair which can be combined together, and registered with the list. Further, in contrast thereto, when these two chapters have respectively separate attributes, step S1810 is skipped, and those are not registered with the list for combination object chapters.

Further, in the step S1807, the chapter which is a current processing object is not the chapter extracted in the step S1805 or step S1806; a series of the processings in the step S1808 to step S1810 are skipped.

Next, in step S1811, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S1811, the processing proceeds to step S1812, the chapter number is updated, and the processing operations in step S1803 to step S1811 are applied to the new chapter. Further, when it is determined that the chapter is the last chapter, the processing proceeds to step S1813.

In step S1813, chapters which have been registered with the list for combination object chapters in the step S1810, the chapters having the same attribute and being adjacent to one another are combined into one, and a series of the processing operations are completed.

In accordance with a series of the processing operations described in FIG. 18, when the adjacent chapters with the same attribute are combined, by merely designating only the title by the user, chapters which have the same attribute and which are adjacent to one another are automatically combined.

In accordance therewith, an editing result which is the same as in a case where the chapters with the same attribute are collected into one play list and all of the chapters are combined can be realized with simple operations, and the ease of operation of the user is improved.

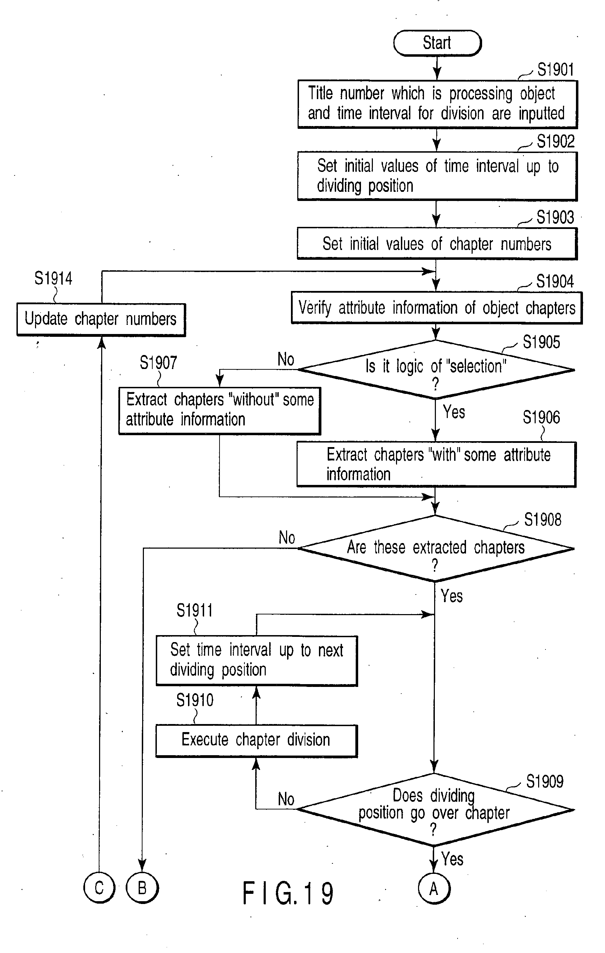

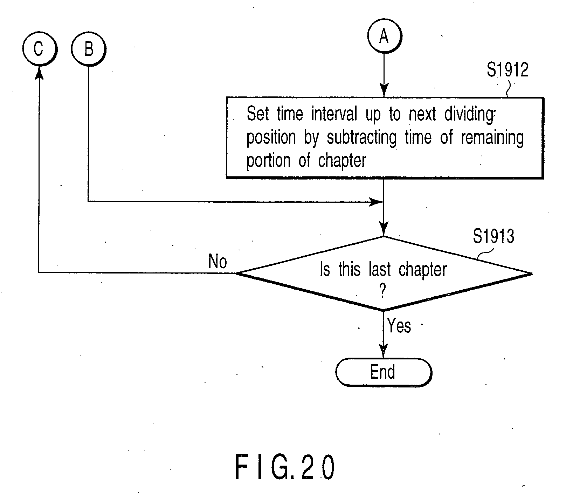

FIGS. 19 and 20 show processing operations of sorting the chapters in the title in accordance with differences in the attribute information, and of carrying out regular interval chapter division with only the chapters with some attribute being as the objects, on the basis of the attribute information set to each chapter in the title by the three types (Property_Flag, EP_Type, PRM_TXTI) of means described above.

First, in step S1901, a number of the title to be processed and a time interval for chapter division are inputted. This editing function is configured such that only necessary chapters are automatically extracted and regular interval chapter division is carried out thereto by the processings from step S1902 which will be described hereinafter on. Therefore, in the step S1901, it is sufficient that the user merely designates only a number of the title to be processed, and there is no need to designate the chapters which are processing objects included in the title one by one.

Next, in step S1902, an initial value of a time interval up to a dividing position at which chapter division is carried out is set. Here, the time interval inputted in the step S1901 is set as is.

In the following step S1903, a number of the first chapter which will be a processing object among the chapters included in the title inputted in the step S1901 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

Subsequently, in step S1904, the attribute information of the chapters which will be objects are verified. This is realized by the processing operations described above in FIGS. 7 to 9. Next, in step S1905, the processing is diverged in accordance with how the attribute information of the chapters verified in the step S1904 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S1906, and the chapters with some attribute information are extracted. Concretely, for example, there is an example of processing in which the chapters having chapter names are set are extracted.

Further, if it is based on the logic of "rejection", the processing proceeds to step S1907, and the chapters without some attribute information are extracted. Concretely, for example, there is an example of processing in which the chapters having the specific character string that is "CM" described therein as text information are not extracted.

In the following step S1908, the processing is diverged in accordance with whether or not the chapter which is a current processing object is the chapter extracted in the step S1906 or step S1907.

If the chapter which is a current processing object is the chapter extracted in the step S1906 or step S1907, the processing proceeds to step S1909, and it is determined whether or not the chapter dividing position goes over the chapter.

When the chapter dividing position does not go over the chapter, the processing proceeds to step S1910, and the chapter division is executed in the step. Next, the processing proceeds to step S1911, a time interval up to the next dividing position is set, and the processing returns to the aforementioned step S1909.

In this way, unless the chapter dividing position set on the basis of the inputted time interval goes over the chapter, the processings in the step S1909 to step S1911 are repeated, and regular interval chapter division is carried out.

When the set chapter dividing position goes over the chapter in the step 1909, the processing proceeds to step S1912. In step S1912, a value obtained by subtracting a time of the remaining portion of the chapter from the set time interval is set as a time interval up to the next chapter dividing position.

For example, if the time interval for the regular interval chapter division inputted in the step S1901 is at intervals of 5 minutes, and when the remaining portion of the chapter is three minutes, two minutes obtained by subtracting three minutes from five minutes is made to be the time interval up to the first chapter dividing position in the next chapter.

Further, in the step S1908, when the chapter which is a current processing object is not the chapter extracted in the step S1906 or step S1907, a series of the processings in step S1909 to step S1912 are skipped.

In the following step S1913, the processing is diverged in accordance with whether or not the chapter to be processed is the last chapter. Usually, if all of the chapters in the title are made to be objects, it is determined whether or not the chapter is the last chapter among the chapters included in the'title. In addition, if some of the chapters in the title are made to be objects, it is determined whether or not the chapter is the last chapter among the chapters included within the objective range.

When it is determined that the chapter is not the last chapter yet in the step S1913, the processing proceeds to step S1914, the chapter number is updated, and the processing operations in step S1904 to step S1913 are applied to the new chapter. Further, when it is determined that the chapter is the last chapter, a series of the processings are entirely completed.

In accordance with a series of the processing operations described in FIGS. 19 and 20, by merely designating only the title by the user, regular interval chapter division can be automatically applied to only the chapters with the same attribute.

In accordance therewith, an editing result which is the same as in a case where the chapters with the same attribute are collected into one play list and regular interval chapter division is carried out can be carried out with simple operations, and the ease of operation of the user is improved.

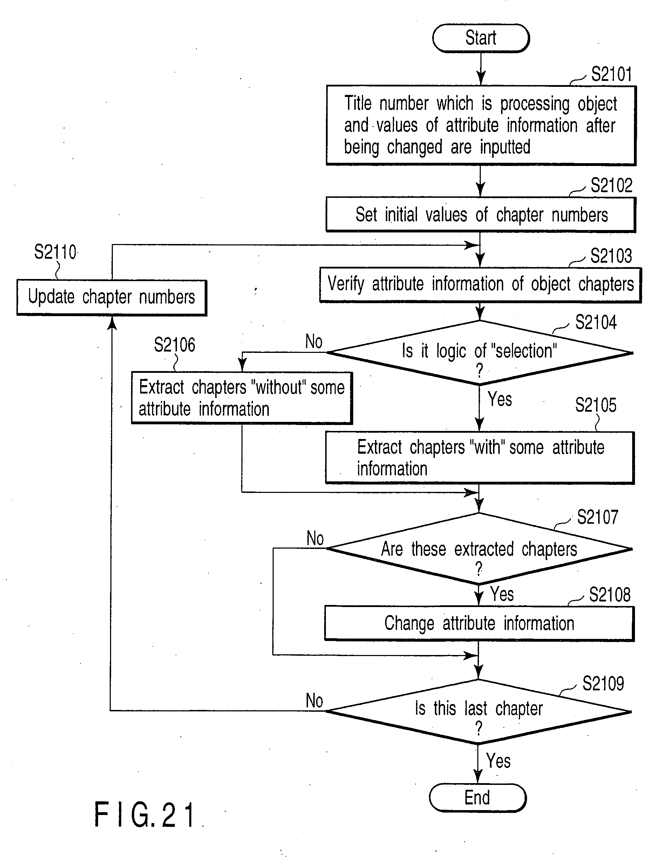

FIG. 21 shows processing operations of sorting the chapters in the title in accordance with differences in the attribute information, and of automatically changing chapters with some attribute collectively so as to have another attribute, on the basis of the attribute information set to each chapter in the title by the three types (Property_Flag, EP_Type, PRM_TXTI) of means described above.

First, in step S2101, a number of the title to be processed is inputted. This editing function is configured such that only specific chapters are automatically extracted and the attribute thereof are changed by the processings from step S2102 which will be described hereinafter on. Therefore, in the step S2101, it is sufficient that the user merely designates only a number of the title to be processed, and there is no need to designate the chapters which are changing objects included in the title one by one.

Further, in step S2101, in addition thereto, values of the attribute information after changing attribute are inputted. Here, in a case where the above-described Property_Flag described above is used, a value newly set to the Property_Flag of an entry point (EP) is inputted.

Further, in a case where the above-described EP_Type is used, an operation such as setting of an appropriate name, or erasing of a chapter name corresponds thereto. Moreover, in a case where the above-described PRM_TXTI is used, an operation of setting an appropriate character string as text information of a chapter corresponds thereto.

Next, in step S2102, a number of the first chapter which will be a processing object among the chapters included in the title inputted in the step S2101 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S2103, the attribute information of the chapters which will be objects are verified. This is realized by the processing operations described above in FIGS. 7 to 9. Next, in step S2104, the processing is diverged in accordance with how the attribute information of the chapters verified in the step S2103 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S2105, and the chapters with some attribute information are extracted. Concretely, for example, there is an example of processing in which the chapters having chapter names set thereto are'extracted.

Further, if it is based on the logic of "rejection", the processing proceeds to step S2106, and the chapters without some attribute information are extracted. Concretely, for example, there is an example of processing in which the chapters having the specific character string that is "CM" described therein as text information are not extracted.

Next, in step S2107, the processing is diverged in accordance with whether or not the chapter which is a current processing object is the chapter extracted in the step S2105 or step S2106.

If the chapter which is a current processing object is the chapter extracted in the step S2105 or step S2106, the processing proceeds to step S2108, and the attribute information of the chapter is changed.

In contrast thereto, when the chapter which is a current processing object is not the chapter extracted in the step S2105 or step S2106, step S2108 is skipped, and the attribute information of the chapter is not changed.

Next, in step S2109, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S2109, the processing proceeds to step S2110, the chapter number is updated, and the processing operations in step S2103 to step S2109 are applied to the new chapter. Further, when it is determined that the chapter is the last chapter, a series of the processing operations are entirely completed.

In accordance with a series of the processing operations described in FIG. 21, when the attribute of the chapter is changed, by merely designating only the title by the user, the attribute of the chapters with some attribute included in the title can be collectively automatically changed.

Next, FIGS. 21 to 24 show processing operations in which a plurality of chapters which exist in one title and which have the same attribute are made to be objects for editing processing while being sequentially switched. Namely, originally, the editing operation is to be applied to one chapter. However, chapters with the same attribute are extracted, those are made to be a processing object one by one for the editing operation, and the user collectively applies the editing processing onto those.

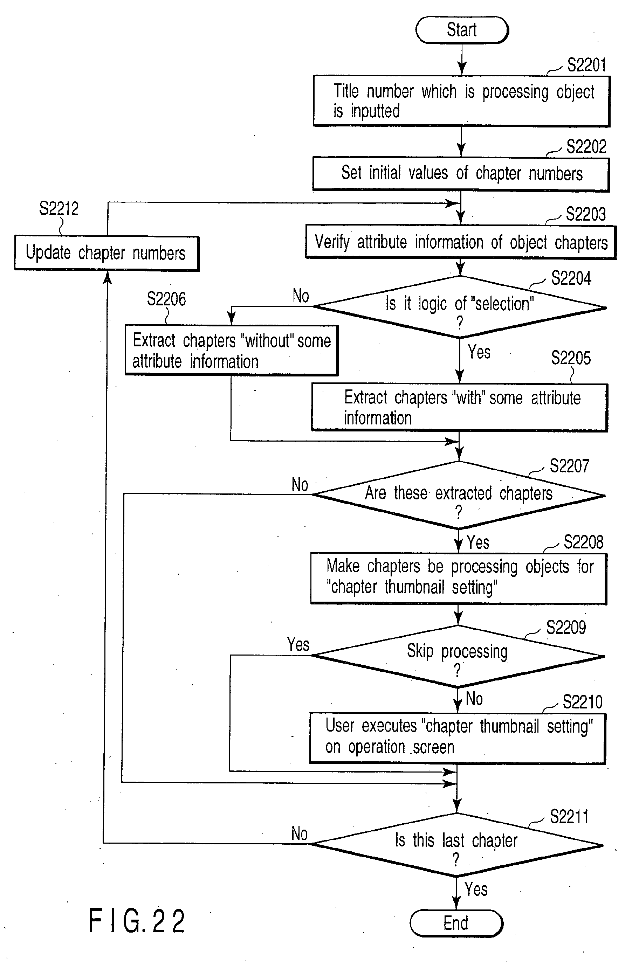

FIG. 22 shows processing operations of sorting the chapters in the title in accordance with differences in the attribute information, and of applying "chapter thumbnail setting" while sequentially switching chapters with the same attribute, on the basis of the attribute information set to each chapter in the title by the three types (Property_Flag, EP_Type, PRM_TXTI) of means described above.

First, in step S2201, a number of the title to be processed is inputted. This editing function is configured such that only specific chapters are extracted and those are one by one made to be a processing object for "chapter thumbnail setting" by the processings from step S2202 which will'be described hereinafter on. Therefore, in the step S2201, it is sufficient that the user merely designates only a number of the title to be processed, and there is no need to designate the chapters which are processing objects included in the title one by one.

Next, in step S2202, a number of the first chapter which will be a processing object for "chapter thumbnail setting" among the chapters included in the title inputted in the step S2201 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S2203, the attribute information of the chapters which will be objects are verified. This is realized by the processing operations described above in FIGS. 7 to 9. Next, in step S2204, the processing is diverged in accordance with how the attribute information of the chapters verified in the step S2203 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S2205, and the chapters with some attribute information are extracted. Concretely, for example, there is an example of processing in which the chapters having chapter names set thereto are extracted.

Further, if it is based on the logic of "rejection", the processing proceeds to step S2206, and the chapters without some attribute information are extracted. Concretely, for example, there is an example of processing in which the chapters having the specific character string that is "CM" described therein as text information are not extracted.

Next, in step S2207, the processing is diverged in accordance with whether or not the chapter which is a current processing object is the chapter extracted in the step S2205 or step S2206.

If the chapter which is a current processing object is the chapter extracted in the step S2205 or step S2206, the processing proceeds to step S2208. In step S2208, the aforementioned current processing object chapter is made to be a processing object for "chapter thumbnail setting".

In the following step S2209, the processing is diverged in accordance with whether or not "chapter thumbnail setting" processing with respect to the aforementioned current processing object chapter is carried out. In a case of carrying out this processing, the processing proceeds to step S2210, and the user executes "chapter thumbnail setting" on the operation screen. In contrast thereto, in a case where this processing is not carried out, step S2210 is skipped, and the user does not execute "chapter thumbnail setting".

Further, in the step S2207, when the aforementioned current processing object chapter is not the chapter extracted in the step S2205 or step S2206, a series of the processing operations in step S2208 to step S2210 is skipped.

In the following step S2211, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S2211, the processing proceeds to step S2212, the chapter number is updated, and the processing operations in step S2203 to step S2211 are applied to the new chapter. Further, when it is determined that the chapter is the last chapter, a series of the processing operations are entirely completed.

In accordance with a series of the processing operations described in FIG. 22, when "chapter thumbnail setting" is applied to the chapters with the same attribute one by one, because the chapters with the same attribute are automatically prepared as an operating object one by one without the user opening the operation screen in order to search a chapter to be processed each time, the ease of operation of the user is improved.

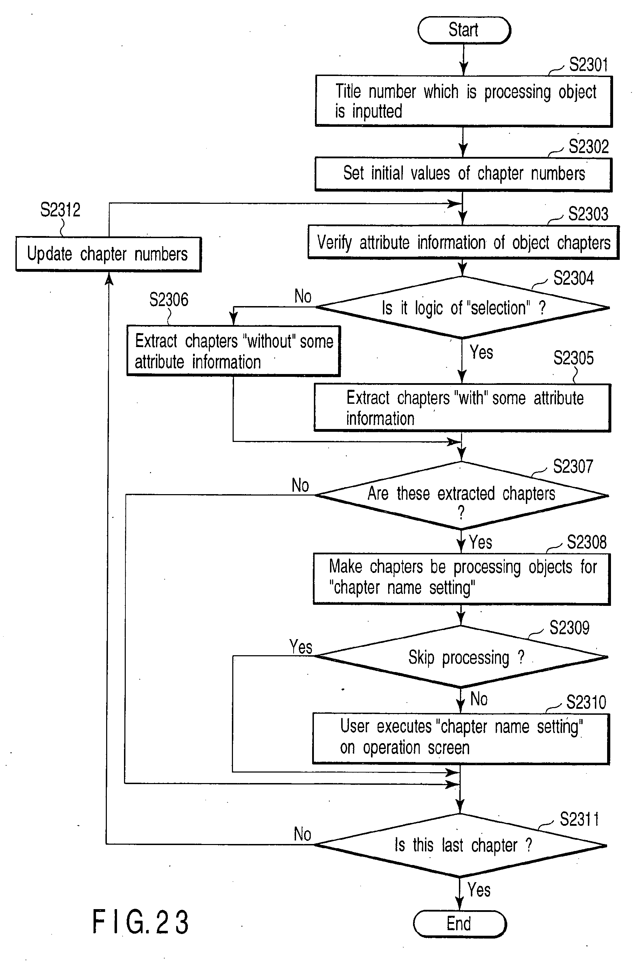

FIG. 23 shows processing operations of sorting the chapters in the title in accordance with differences in the attribute information, and of applying "chapter name setting" while sequentially switching chapters with the same attribute, on the basis of the attribute information set to each chapter in the title by the three types (Property_Flag, EP_Type, PRM_TXTI) of means described above.

First, in step S2301, a number of the title to be processed is inputted. This editing function is configured such that only specific chapters are extracted and those are one by one made to be a processing object for "chapter name setting" by the processings from step S2302 which will be described hereinafter on. Therefore, in the step S2301, it is sufficient that the user merely designates only a number of the title to be processed, and there is no need to designate the chapters which are processing objects included in the title one by one.

Next, in step S2302, a number of the first chapter which will be a processing object for "chapter name setting" among the chapters included in the title inputted in the step S2301 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S2303, the attribute information of the chapters which will be objects are verified. This is realized by the processing operations described above in FIGS. 7 to 9. Next, in step S2304, the processing is diverged in accordance with how the attribute information of the chapters verified in the step S2303 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S2305, and the chapters with some attribute information are extracted. Further, if it is based on the logic of "rejection", the processing proceeds to step S2306, and the chapters without some attribute information are extracted.

Next, in step S2307, the processing is diverged in accordance with whether or not the chapter which is a current processing object is the chapter extracted in the step S2305 or step S2306.

If the chapter which is a current processing object is the chapter extracted in the step S2305 or step S2306, the processing proceeds to step S2308. In step S2308, the aforementioned current processing object chapter is made to be a processing object for "chapter name setting".

In the following step S2309, the processing is diverged in accordance with whether or not "chapter name setting" processing with respect to the aforementioned current processing object chapter is carried out. In a case of carrying out this processing, the processing proceeds to step S2310, and the user executes "chapter name setting" on the operation screen. In contrast thereto, in a case where this processing is not carried out, step S2310 is skipped, and the user does not execute "chapter name setting".

Further, in the step S2307, when the current processing object chapter is not the chapter extracted in the step S2305 or step S2306, a series of the processing operations in step S2308 to step S2310 are skipped.

In the following step S2311, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S2311, the processing proceeds to step S2312, the chapter number is updated, and the processing operations in step S2303 to step S2311 described above are applied to the new chapter. Further, when it is determined that the chapter is the last chapter, a series of the processing operations are entirely completed.

In accordance with a series of the processing operations described in FIG. 23, when "chapter name setting" is applied to the chapters with the same attribute one by one, because the chapters with the same attribute are automatically prepared as an operating object one by.one.without the user opening the operation screen in order to search a chapter to be processed each time, the ease of operation of the user is improved.

Note that a series of the processing operations described in FIG. 23 are genuinely made to be an editing function for "chapter name setting" when the attribute information is set to each chapter in the title by using the Property_Flag described above.

On the other hand, when the attribute information is set to each chapter in the title by using the EP_Type or PRM_TXTI described above, a series of the processing operations described in FIG. 23 serve as a function of setting the attribute information with respect to the chapters in addition to a function as "chapter name setting".

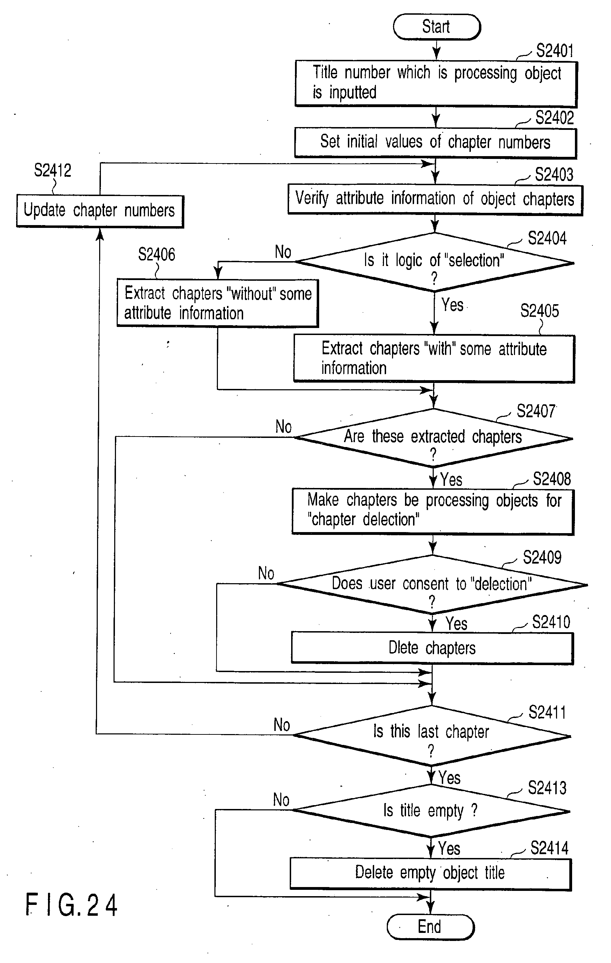

FIG. 24 shows processing operations of sorting the chapters in the title in accordance with differences in the attribute information, and of applying "chapter deletion" while sequentially switching chapters with the same attribute, on the basis of the attribute information set to each chapter in the title by the three types (Property_Flag, EP_Type, PRM_TXTI) of means described above.

First, in step S2401, a number of the title to be processed is inputted. This editing function is configured such that only specific chapters are extracted and those are one by one made to be a processing object for "chapter deletion" by the processings from step S2402 which will be described hereinafter on. Therefore, in the step S2401, it is sufficient that the user merely designates only a number of the title to be processed, and there is no need to designate the chapters which are processing objects included in the title one by one.

Next, in step S2402, a number of the first chapter which will be a processing object for "chapter deletion" among the chapters included in the title inputted in the step S2401 is set. Usually, if all of the chapters in the title are made to be objects, it is recommended that the fist chapter be made to be an initial value. Further, if some of the chapters in the title are made to be objects, a number of the first chapter among the chapters included within the objective range can be made to be an initial value.

In the following step S2403, the attribute information of the chapters which will be objects are verified. This is realized by the processing operations described above in FIGS. 7 to 9. Next, in step S2404, the processing is diverged in accordance with how the attribute information of the chapters verified in the step S2403 are handled.

Namely, the processing is diverged in accordance with whether it is based on the logic of "selection" that the chapters with some attribute information are made to be objects, or it is based on the logic of "rejection" that the chapters without some attribute information are made to be objects.

If it is based on the logic of "selection", the processing proceeds to step S2405, and the chapters with some attribute information are extracted. Further, if it is based on the logic of "rejection", the processing proceeds to step S2406, and the chapters without some attribute information are extracted.

Next, in step S2407, the processing is diverged in accordance with whether or not the chapter which is a current processing object is the chapter extracted in the step S2405 or step S2406.

If the chapter which is a current processing object is the chapter extracted in the step S2405 or step S2406, the processing proceeds to step S2408. In step S2408, the aforementioned current processing object chapter is made to be a processing object for "chapter deletion".

In the following step S2409, the processing is diverged in accordance with whether or not the user consents to the deletion of the aforementioned current processing object chapter. Concretely, a warning screen such as "This chapter will be deleted. Are you sure you want to delete this chapter? YES/NO" is indicated on the operation screen, and due to the user being made to select YES/NO, the processing is diverged in accordance with whether or not the user consents to the deletion of the aforementioned current processing object chapter.

If the user consents to the deletion of the chapter, the processing proceeds to step S2410, and the chapter is deleted. In contrast thereto, in a case where the user does not consent to the deletion, step S2410 is skipped, and "chapter deletion" is not carried out.

Further, in the step S2407, when the chapter which is a current processing object is not the chapter extracted in the step S2405 or step S2406, a series of the processing operations in step S2408 to step S2410 are skipped.

In the following step S2411, the processing is diverged in accordance with whether or not the chapter to be processed is the last chapter. Usually, if all of the chapters in the title are made to be objects, it is determined whether or not the chapter is the last chapter among the chapters included in the title. Further, if some of the chapters in the title are made to be objects, it is determined whether or not the chapter is the last chapter among the chapters included within the objective range.

When it is determined that the chapter is not the last chapter yet in the step S2411, the processing proceeds to'step S2412, the chapter number is updated, and the processing operations in step S2403 to step S2411 described above are applied to the new chapter. Further, when it is determined that the chapter is the last chapter, the processing proceeds to step S2413.

Next, in step S2413, the processing is diverged in accordance with whether or not the title to be processed is made to be empty by deleting the chapters. There is an example of a case where, for example, all the chapters included in the title to be processed have the same attribute, and are extracted in step S2405 or step S2406, and as a result thereof, all the chapters in the title are deleted.

If the title to be processed is made to be empty, the processing proceeds to step S2414, and the empty title to be processed is deleted. Further, if the title to be processed is not empty, step S2414 is skipped, and a series of the processing operations are entirely completed.

In accordance with a series of the processing operations described in FIG. 24, when "chapter deletion" is applied to the chapters with the same attribute one by one, because the chapters with the same attribute are automatically prepared as a deleting object one by one without the user opening the operation screen in order to search a chapter which is a deleting object each time, the ease of operation of the user is improved:

Further, in accordance with a series of the processing operations described in FIG. 24, because it is configured such that the user is asked whether deletion is possible or impossible with respect to each chapter which is a deleting object, editing operation having even minute contents in which the chapters with the same attribute are not deleted collectively, and some of those are not deleted and left is possible. Therefore, the ease of operation of the user is improved.

The embodiment of the present invention has been described above with reference to the drawings. However, the present invention is not limited to the above-described embodiment as is, and disclosed components can be modified and realized within a range which does not deviate from the gist of the present invention at the practical phase.

For example, there has been described with reference to FIGS. 3A, 3B, 10A, and 10B to 12 the means for displaying such that differences in the attribute information of the chapters can be recognized in accordance with a mode in which marks M are indicated on the thumbnails of the chapters with specific attribute information, or the thumbnails of the chapters with specific attribute information are framed and displayed, when a list of the chapters in a title is displayed on the screen.

However, the present invention is not limited to this mode, any means for displaying differences in the attribute of each chapter so as to be recognizable may be further in a different mode. For example, it may be a mode in which the thumbnails of all the chapters in the title are not displayed, but the chapters are divided into groups for each attribute information, and only thumbnails of a group of chapters with the same attribute information are list-displayed, and moreover, thumbnails of a group of chapters with another attribute information are list-displayed by a switching function.

Further, various inventions can be formed by appropriately combining a plurality of disclosed components which have been disclosed in the embodiment described above. For example, some of disclosed components may be eliminated from all the disclosed components shown in the embodiment. Moreover, disclosed components according to different embodiments may be appropriately combined.

## Claims

1. An image editing apparatus **characterized by** comprising:
a recording unit (12 to 15) configured to record a title including image information onto a recording medium (11, 13a);
a dividing unit (17) configured to divide the title into a plurality of chapters by setting information (EP) showing boundaries at arbitrary positions of a title recorded on the recording medium (11, 13a) at the recording unit (12 to 15);
a setting unit (17) configured to set information showing attributes (Property_Flag, EP_Type, PRM_TXTI) of chapters including the information (EP), in the information (EP) showing boundaries included in the respective chapters divided at the dividing unit (17); and
a control unit (17) configured to sort the chapters on the basis of the information showing attributes (Property_Flag, EP_Type, PRM_TXTI) set at the setting unit (17), and to apply predetermined editing processing with respect to the plural sorted chapters (FIGS. 1, and 11 to 24).

2. An image editing apparatus according to claim 1, **characterized in that** the control unit (17) comprises:
a display control unit (17) configured to sort the chapters on the basis of the information showing attributes (Property_Flag, EP_Type, PRM_TXTI) set at the setting unit (17), and to display said plurality of chapters in display modes.which are different in accordance with an attribute of each chapter when said plurality of chapters are list-displayed (FIGS. 1, 11, and 12).

3. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a registering unit (17) configured to register the chapters extracted at the extracting unit (17) with a play list (FIGS. 1, and 13).

4. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17);
a registering unit (17) configured to register the chapters extracted at the extracting unit (17) with a dubbing list; and
a dubbing unit (17) configured to dub the chapters registered at the registering unit (17) (FIGS. 1, 14, and 15).

5. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a deleting unit (17) configured to delete the chapters extracted at the extracting unit (17) from the recording medium (11, 13a) (FIGS. 1 and 16).

6. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a playback unit (17) configured to playback-display all or some of the chapters extracted at the extracting unit (17) (FIGS. 1 and 17).

7. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a combining unit (17) configured to combine the chapters adjacent to one another among the chapters extracted at the extracting unit (17) into one chapter (FIGS. 1 and 18).

8. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a setting unit (17) configured to set new chapter boundaries at constant time intervals with respect to the chapters extracted at the extracting unit (17) (FIGS. 1, 19 and 20).

9. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a changing unit (17) configured to change the attribute information for the chapters extracted at the extracting unit (17) into different contents (FIGS. 1 and 21).

10. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
a switching unit (17) configured to provide said plurality of chapters extracted at the extracting unit (17) as objects of editing processing while sequentially switching those (FIGS. 1, and 22 to 24).

11. An image editing apparatus according to claim 1, **characterized in that** the control unit (17) comprises:
an extracting unit (17) configured to extract chapters with specific attribute information or chapters without specific attribute information on the basis of the information showing attributes (Property_Flag, EP_Type, PRM_TXTI) set at the setting unit (17); and
an editing unit (17) configured to apply predetermined editing processing with respect to said plurality of chapters extracted at the extracting unit (17) collectively (FIGS. 1, and 11 to 24).

12. An image editing apparatus according to claim 1, **characterized in that** the setting unit (17) is configured to set flag information which can be sorted into two or more types as the information showing attributes of the chapters in the information (EP) showing boundaries included in the chapters (FIGS. 1 and 5) .

13. An image editing apparatus according to claim 1, **characterized in that** the setting unit (17) is configured to set the information showing attributes of the chapters in accordance with presence/absence of text information in the information (EP) showing boundaries included in the chapters (FIGS. 1 and 8).

14. An image editing apparatus according to claim 1, **characterized in that** the setting unit (17) is configured to set text information of a specific character string as the information showing attributes of the chapters in the information (EP) showing boundaries included in the chapters (FIGS. 1 and 9).

15. An image editing method comprising:
recording a title including image information onto a recording medium (11, 13a);
dividing the title into a plurality of chapters by setting information (EP) showing boundaries at arbitrary positions of a recorded title;
setting information showing attributes (Property_Flag, EP_Type, PRM_TXTI) of chapters including the information (EP), in the information (EP) showing boundaries included in the respective divided chapters; and
sorting the chapters on the basis of the set information showing attributes (Property_Flag, EP_Type, PRM_TXTI), and applying predetermined editing processing with respect to the plural sorted chapters (FIGS. 1, and 11 to 24).
